(19)

Europäisches
Patentamt
European
Patent Office
Office européen
des brevets

(11) **EP 2 155 795 B1**

(12) **EUROPEAN PATENT SPECIFICATION**

(45) Date of publication and mention
of the grant of the patent:
**01.02.2012 Bulletin 2012/05**

(51) Int Cl.:
***C09D 153/00*** *(2006.01)*     ***C08F 293/00*** *(2006.01)*
***C08F 297/02*** *(2006.01)*

(21) Application number: **08771322.8**

(22) Date of filing: **18.06.2008**

(86) International application number:
**PCT/US2008/067294**

(87) International publication number:
**WO 2008/157578 (24.12.2008 Gazette 2008/52)**

(54) **COATING COMPOSITIONS**

BESCHICHTUNGSZUSAMMENSETZUNGEN

COMPOSITIONS DE REVÊTEMENT

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **18.06.2007 US 936122 P**

(43) Date of publication of application:
**24.02.2010 Bulletin 2010/08**

(73) Proprietor: **E. I. Du Pont de Nemours and Company
Wilmington, DE 19898 (US)**

(72) Inventors:
• **MA, Sheau-Hwa
West Chester, Pennsylvania 19382 (US)**

• **BARSOTTI, Robert, John
Franklinville, New Jersey 08322 (US)**

(74) Representative: **DuPont Performance Coatings
Biering/Blum/Kimpel
Patentabteilung 102 JL
Christbusch 25
42285 Wuppertal (DE)**

(56) References cited:
**WO-A-00/12579          WO-A-2004/007627
US-A1- 2002 132 921     US-B1- 6 174 953**

**Description**

**FIELD OF INVENTION**

The present invention is directed to a coating composition comprising a block copolymer comprising two or more blocks each having individual block crosslinking reactivity towards a crosslinking agent to form a crosslinked network.

**BACKGROUND OF INVENTION**

To meet the many requirements of an exterior finish for automobiles and trucks, the automotive industry currently is using one or more coating compositions to form multi-layer coating finishes on automobile and truck bodies and parts. Typically, these finishes comprise following coating layers: (1) an electrocoat layer applied over a substrate, such as an automobile body made of phosphatized cold rolled steel; (2) a primer layer; (3) a colorcoat or basecoat layer, typically pigmented; and (4) a clearcoat layer. A colored top-coat layer may be used in place of the colorcoat and the clearcoat layers. Repair or refinishing of such multi-layer finishes of automobiles and trucks is labor intensive and time consuming. In addition, appearance property such as high gloss, high DOI (Distinctness of Image), and smoothness are the critical factors desired for a high end automobile and truck coating finish.

It is desired that the time necessary for curing a coating layer, herein referred to as curing time, is relatively short in order to increase productivity and to reduce operation costs. For example, short curing time is desired so an automobile body shop can move the coated automobile, truck or automobile body parts out of coating operation area so new automobile or truck can be coated or refinished or other coating operations such as sanding, additional coating layers, decorative stripes or decals can be applied.

Using conventional formulation techniques, the cure time of a two component coating composition can be reduced by the use of catalyst but a catalyst also shortens the pot life of the coating composition and often adversely affects the appearance of the resulting coating finish since the coating after application requires time to flow and level to form a smooth glossy coating finish. To improve the flow and the leveling of the coating composition for a satisfactory appearance of the resulted coating finish, solvents or diluents can be added but these components increase the VOC (volatile organic content) level of the coating composition. Said VOC level is set forth in local regulations, usually in the range of 239-479 grams per liter (2 -4 lb/gal).

To optimize and balance the overall performance of a coating composition, polymer compositions having crosslinkable functional groups with different reactivity towards a given crosslinking agent have been utilized as disclosed by Lewin et al. in U.S. Patent No. 6,326,059 and Lewin et al. in U.S. Patent No. 6,471,185. These polymer compositions are random copolymers with crosslinkable functional groups randomly distributed throughout the polymer chain according to the relative reactivity of the individual monomers and the synthetic conditions.

It is desired to better control the placement of these crosslinkable functional groups along the polymer chain to improve properties of the polymer and hence properties of the resulted coating composition.

US 2002/0132921 A1 discloses a curable, water-based coating composition comprising a water-dispersible cross-linking agent and a water-based copolymer which includes a first and a second block polymer.

US 6,174,953 B1 discloses an aqueous coating composition comprising a water-soluble copolymer binder. The copolymer binder can be a block copolymer comprising a water-soluble macromonomer and polymerized monomers.

WO 00/12579 A1 discloses powder coating compositions comprising a capped polyisocyanate crosslinking agent and hydroxyl functional polymer prepared by atom transfer radical polymerization. The hydroxyl-functional polymer can have a diblock copolymer architecture with a hydroxyl-functional block and a hydroxyl-free block.

**STATEMENT OF INVENTION**

This invention is directed to a coating composition comprising a crosslinkable component, a crosslinking component and a liquid carrier in the from of at least one volatile organic solvent, wherein said crosslinkable component comprises a block copolymer comprising a block A and a block B, wherein said block A has a first crosslinking reactivity towards a crosslinking agent and wherein said block B has a second crosslinking reactivity towards said crosslinking agent, wherein the block copolymer has been produced by a method comprising the steps of:

A) selecting ethylenically unsaturated monomers to form a first monomer mixture for the block A and a second monomer mixture for the block B such that said first crosslinking reactivity is different from said second crosslinking reactivity;
B) polymerizing the first monomer mixture to form the block A; and
C) polymerizing the block A and the second monomer mixture to form said block copolymer as a diblock AB copolymer.

This invention is also directed to a coating composition comprising a block copolymer comprising a block A, a block B and a block C, wherein said block A has a first crosslinking reactivity towards a crosslinking agent and wherein said block B has a second crosslinking reactivity towards said crosslinking agent and wherein said block C has a third crosslinking reactivity towards said crosslinking agent, wherein the block copolymer has been produced by a method comprising the steps of:

A) selecting ethylenically unsaturated monomers to form a first monomer mixture for the block A, a second monomer mixture for the block B, and a third monomer mixture for the block C such that said first crosslinking reactivity is different from said second crosslinking reactivity and said second crosslinking reactivity is different from said third crosslinking reactivity;
B) polymerizing the first monomer mixture to form the block A;
C) polymerizing the block A and the second monomer mixture to form a diblock AB copolymer; and
D) polymerizing the diblock AB copolymer and the third monomer mixture to form said block copolymer as a triblock ABC copolymer.

## DETAILED DESCRIPTION

The features and advantages of the present invention will be more readily understood, by those of ordinary skill in the art, from reading the following detailed description. It is to be appreciated that certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both proceeded by the word "about." In this manner, slight variations above and below the stated ranges can be used to achieve substantially the same results as values within the ranges. Also, the disclosure of these ranges is intended as a continuous range including every value between the minimum and maximum values.

As used herein:

"Two component coating composition" means a thermoset coating composition comprising two components stored in separate containers. These containers are typically sealed to increase the shelf life of the components of the coating composition. The components are mixed prior to use to form a pot mix. The pot mix is applied as a layer of desired thickness on a substrate surface, such as an automobile body or body parts. After application, the layer is cured under ambient conditions or bake cured at elevated temperatures to form a coating on the substrate surface having desired coating properties, such as high gloss, smooth appearance, and durability.

All "molecular weights" are determined by gel permeation chromatography (GPC) using polystyrene as the standard.

"Tg" means glass transition temperature of the polymer and can be measured by differential scanning calorimetry (DSC) or can be calculated as described by Fox in Bull. Amer. Physics Soc., 1, 3, page 123 (1956).

"Acrylic polymer" means a polymer comprises polymerized "(meth)acrylate(s)" which mean acrylates and/or methacrylates, optionally copolymerized with other ethylenically unsaturated monomers, such as acrylamides, methacrylamides, acrylonitriles, methacrylonitriles, and vinyl aromatics, such as styrene.

"vehicle" or "automobile" or "automobile vehicle" includes an automobile, such as, car, van, mini van, bus, SUV (sports utility vehicle); truck; semi truck; tractor; motorcycle; trailer; ATV (all terrain vehicle); pickup truck; heavy duty mover, such as, bulldozer, mobile crane and earth mover; airplanes; boats; ships; and other modes of transport.

"Crosslinkable functional groups" are functional groups positioned in each molecule of compounds, oligomers, polymers, the backbone of the polymers, pendant from the backbone of the polymers, terminally positioned on the backbone of the polymers, or a combination thereof, wherein these functional groups are capable of crosslinking with the crosslinking functional groups to produce a crosslinked network. One of ordinary skill in the art would recognize that certain crosslinkable functional group combinations would be excluded, since, if present, these combinations would crosslink among themselves (self-crosslink), thereby destroying their ability to crosslink with the crosslinking functional groups defined below. Typical crosslinkable functional groups can be selected from hydroxyl, acetoacetoxy, carboxyl, primary amine, secondary amine, epoxy, anhydride, ketimine, aldimine, or a combination thereof.

"Crosslinking functional groups" are functional groups positioned in each molecule of monomer, oligomer, polymer, the backbone of the polymer, pendant from the backbone of the polymer, terminally positioned on the backbone of the polymer, or a combination thereof, wherein these functional groups are capable of crosslinking with the crosslinkable functional groups to produce a crosslinked network. A crosslinking agent is a compound, a monomer, an oligomer, a polymer, or a mixture thereof, that has one or more crosslinking functional groups. One of ordinary skill in the art would recognize that certain crosslinking group/crosslinkable functional group combinations would be excluded from the present invention, since they would fail to crosslink to form a crosslinked network. Typical crosslinking functional groups can be selected from the group consisting of isocyanate, amine, ketimine, melamine, epoxy, polyacid, anhydride, and a combination thereof.

It would be clear to one of ordinary skill in the art that certain crosslinking functional groups crosslink with certain crosslinkable functional groups in paired combinations. Some of those paired combinations include: (1) ketimine crosslinking functional groups generally crosslink with acetoacetoxy, epoxy, or anhydride crosslinkable functional groups; (2) isocyanate and melamine crosslinking functional groups generally crosslink with hydroxyl, primary and secondary amine, ketimine, or aldimine crosslinkable functional groups; (3) epoxy crosslinking functional groups generally crosslink with carboxyl, primary and secondary amine, ketimine, or anhydride crosslinkable functional groups; (4) amine crosslinking functional groups generally crosslink with acetoacetoxy crosslinkable functional groups; (5) polyacid crosslinking functional groups generally crosslink with epoxy crosslinkable functional groups; and (6) anhydride crosslinking functional groups generally crosslink with epoxy and ketimine crosslinkable functional groups.

The block copolymer can be a diblock block A-block B copolymer (herein referred to as diblock AB copolymer), a triblock block A-block B-block A copolymer (herein referred to as triblock ABA copolymer), or a triblock block A-block B-block C copolymer (herein referred to as a triblock ABC copolymer). The block copolymer comprises two or more blocks each having individual block crosslinking reactivity towards a crosslinking agent, such as polyisocyanate, to form a crosslinked network.

This invention is directed to a coating composition comprising said block copolymer. The coating composition of this invention can be used in a clearcoat, a pigmented basecoat, a pigmented undercoat, or a top coat, suited for various coating processes, such as automotive OEM and automotive refinish. The coating composition of this invention is particularly well suited for use in refinishing or repairing automotive, truck, or other vehicles. The coating composition of this invention can have excellent physical properties, such as excellent chip and humidity resistance and intercoat adhesion, without sacrificing desired fast dry properties at ambient temperatures and overall appearance, such as DOI.

The coating composition of this invention preferably contains about 5 to 90% by weight, based on the total weight of the coating composition, of a film-forming binder comprising the block copolymer, such as the diblock AB copolymer, the triblock ABA copolymer, the triblock ABC copolymer, or a combination thereof; of a volatile organic liquid carrier; and optionally contains pigments in a pigment to binder weight ratio of about 0.1/100 to 200/100.

The block copolymer can be used herein as part of the film forming binder. The block copolymer can have a weight average molecular weight in a range of from of 2,000 to 100,000 and preferably from about 3,000 to 50,000, and more preferably from about 3,000 to 20,000, and a Tg varying in a range of from -20°C to 100°C, preferably from 0°C to 90°C, and more preferably from 10°C to 80°C. The crosslinking agent can be a single crosslinking agent or a mixture of a plurality of crosslinking agents. The crosslinking agent can have one or more crosslinking functional groups.

The polymeric blocks A, B, and C of the block copolymers have different individual block crosslinking reactivity towards a crosslinking. Such individual block crosslinking reactivity can be determined by the presence or absence of the crosslinkable functional groups; the type of the crosslinkable functional groups, such as hydroxyl or amine; positions of the crosslinkable functional groups, such as primary or secondary; distance of the crosslinkable functional groups away from polymer backbone, such as certain number of carbon atom away from the backbone; concentrations of the crosslinkable functional groups in the block; or a combination thereof. These polymeric blocks can have further differences in the size or length of the block, Tg, polarity, or the solubility parameters that can be achieved by selecting different combinations of monomers.

Any of aforementioned crosslinkable functional groups can be suitable for this invention. The following groups are particularly suitable:

1) primary amine;
2) secondary amine;
3) primary hydroxyl;
4) secondary hydroxyl; or
5) mixtures of two or more of the above.

These crosslinkable functional groups have different reactivity towards the crosslinking agent in the following order from high reactivity to low reactivity: Primary amine > secondary amine >> primary hydroxyl > secondary hydroxyl.

The primary amine groups in general are very reactive and prone to oxidation and some side reactions with other ingredients in the coating composition carrying reactive groups such as acid, aldehyde, and ketone groups. Special care to avoid such ingredients in formulation and the storage of the copolymer and the coating composition is required and can be determined by those skilled in the art.

Examples of monomers that can be used to introduce secondary amine groups include t-butylaminoethyl (meth)acrylate. Alternatively, secondary amine groups can be introduced post polymerization by reacting a polymer containing epoxy groups with a primary amine or an alkanol amine having primary amine groups under mild reaction conditions. The preferred amines and alkanol amines have some level of steric hindrance around the amine functional group so that the desired secondary amine groups will not further react with more epoxy groups that lead to either non-crosslinkable tertiary amine groups or crosslinking and gelation of the polymer prematurely in the reactor. Examples of suitable primary amines include isopropyl amine and isobutyl amine. Examples of suitable alkanol amines include 2-amino-1-propanol, 2-amino-1-butanol, 2-amino-1-pentanol, and 2-amino-1-hexanol.

Examples of monomers that are commonly used to introduce primary hydroxyl groups into the block copolymer include 2-hydroxyethyl methacrylate (HEMA), and 2-hydroxyethyl acrylate (HEA). Examples of monomers that are commonly used to introduce secondary hydroxyl groups include hydroxypropyl methacrylate (HPMA) and hydroxypropyl acrylate (HPA). Some commercial samples of monomers for secondary hydroxyl groups usually are a mixture of isomers that contains both primary and secondary, but predominately secondary hydroxyl groups.

The reactivity of these crosslinkable functional groups can be further enhanced by increasing their accessibility for the crosslinking agent. The crosslinkable functional groups will have greater flexibility for the bimolecular reaction with the crosslinking agent when they are placed further away from the backbone of the copolymer. Monomers of the following formula can be used:

$$CH_2=C(R^1)-C(O)OX- R^2$$

wherein X is an linear or branched hydrocarbon diradical connecting group, such as akyl, aryl, or alkaryl, of 4 to 20 carbon atoms and can contain optional ether, ester, or amide groups, $R^1$ is H or $CH_3$, and $R^2$ is a crosslinkable functional group selected from primary amine, secondary amine, primary hydroxyl, and secondary hydroxyl. $R^2$ can typically have 0 to10 hydrocarbon, such as akyl, aryl, or alkaryl, carbon atoms. It is understood by those skilled in the art that when $R^2$ has 0 or 1 carbon atom, then only primary amine or primary hydroxyl groups are available. Useful examples of monomers of said formula include 4-hydroxybutyl acrylate (HBA), 4-hydroxybutyl methacrylate (HBMA), polyethyleneglycol (molecular weight of 200 -100) monoacrylate, polyethyleneglycol (molecular weight 200-1000) monomethacrylate, hydroxyl terminated polycaprolactone acrylate such as Tone M-100 (available from The Dow Chemical Company, Midland, MI), and hydroxyl terminated polycaprolactone methacrylate such as Tone M-201 also available from the Dow Chemical Company.

Depending on the desired crosslinking reactivity of a particular block, the crosslinkable functional groups or a combination thereof can be selected and precisely placed in said block(s) of the block copolymer. The presence and the concentration of each of the crosslinkable functional groups in a specified block provide additional parameters for tuning the polymer properties for the desired coating performance. However, the concentration, also referred to as the number of the crosslinkable functional groups, should be such that on average at least 2, preferably more than 2 crosslinkable functional groups are present in the polymer chain of the block copolymer to ensure robust network formation. Total weight of the monomers having said crosslinkable functional groups can be up to 45% of the total weight of the block copolymer.

The size of each block, also know as a polymeric segment, can vary depending on the final properties desired. Preferably, each block is substantially linear and contains on average at least 3 units of monomers and has a number average molecular weight greater than 300. In one example, the number of monomers within an individual block is about 10 or more. In another example, the weight average molecular weight of each block is in a range of from about 1,000-40,000, preferably from about 1,500-30,000.

The block copolymer can be prepared by conventional living polymerization methods or controlled free radical polymerization methods such as anionic polymerization, group transfer polymerization (GTP), nitroxide-mediated free radical polymerization (NMP), atom transfer radical polymerization (ATRP), or reversible addition-fragmentation chain transfer (RAFT) polymerization techniques. The block copolymer can also be prepared by catalytic chain transfer approach, also known as "macromonomer" approach. Preferably, the block copolymer is prepared by the catalytic chain transfer approach.

The conventional living polymerization methods mentioned above can involve special and costly raw materials including special initiating systems and high purity monomers. Some of them have to be carried out under extreme conditions such as low moisture or low temperature. Furthermore, some of these methods are sensitive to active hydrogen groups on the monomers that are keys to our invention such as the hydroxyl and amine groups. These groups may need to be chemically protected during polymerization and recovered in a subsequent step. In addition, some of initiating systems of said controlled free radical polymerization methods bring undesirable color, odor, metal complexes, or potentially corrosive halides into the product. Extra steps can be required to remove them.

In the catalytic chain transfer approach or "macromonomer" approach, the block copolymers are most conveniently prepared by a multi-step free radical polymerization process. Catalyst can be used at extremely low concentration and has minimum impact on the quality of the product, and the synthesis can be conveniently accomplished in a one-pot process. Such a process is taught, for example in U.S. Patent No. 6,291,620 to Moad et al., hereby incorporated by reference in its entirety.

In first step of the macromonomer approach, a block A of the block copolymer is formed using a free radical polymerization method wherein ethylenically unsaturated monomers or monomer mixtures selected for this block can be polymerized in the presence of cobalt catalytic chain transfer agents or other transfer agents that are capable of terminating the free radical polymer chain and catalyzing the formation of a "macromonomer" with a terminal polymerizable double bond. The polymerization is preferably carried out at elevated temperature in an organic solvent or solvent blend using a conventional free radical initiator and Co (II) or (III) chain transfer agent.

Once the block A macromonomer having the desired molecular weight and conversion is formed, the cobalt chain transfer agent is deactivated by adding a small amount of oxidizing agent such as hydroperoxide. The unsaturated monomers or monomer mixtures selected for a second block such as for block B can then be polymerized in the presence of the block A and additional initiator. This step, which can be referred to as a macromonomer step-growth process, can be carried out at elevated temperature in an organic solvent or solvent blend using a conventional polymerization initiator. Polymerization is continued until a macromonomer is formed at the desired molecular weight and desired conversion of the block B into a diblock AB macromonomer. Selected monomers for a third block, such as additional block A or a block C can be added in the same manner to produce a triblock copolymers such as a triblock ABA or ABC copolymer.

Preferred cobalt chain transfer agents are described in U.S. Patent No. 4,680,352 to Janowicz et al and U.S. Patent No. 4,722,984 to Janowicz, hereby incorporated by reference in their entirety. Most preferred cobalt chain transfer agents are pentacyano cobaltate (II), diaquabis (borondiflurodimethylglyoximato) cobaltate (II), and diaquabis (borondifluorophenylglyoximato) cobaltate (II). Typically these chain transfer agents are used at concentrations of about 2-5000 ppm based on the total weight of the monomer depending upon the particular monomers being polymerized and the desired molecular weight. By using such concentrations, macromonomers having the desired molecular weight can be conveniently prepared.

To make distinct blocks, the growth of each block needs to occur to high conversion. Conversions are determined by size exclusion chromatography (SEC) via integration of polymer to monomer peak. For UV detection, the polymer response factor must be determined for each polymer/monomer polymerization mixture. Typical conversions can be 50% to 100% for each block. Intermediate conversion can lead to block copolymers with a transitioning (or tapering) segment where the monomer composition gradually changes to that of the following block as the addition of the monomer or monomer mixture of the next block continues. This may affect polymer properties such as phase separation, thermal behavior and mechanical modulus and can be intentionally exploited to drive properties for specific applications. This may be achieved by intentionally terminating the polymerization when a desired level of conversion (e.g., >80%) is reached by stopping the addition of the initiators or immediately starting the addition of the monomer or monomer mixture of the next block along with the initiator.

Examples of typical solvents that can be used to form the block copolymer include alcohols, such as methanol, ethanol, n-propanol, and isopropanol; ketones, such as acetone, butanone, pentanone, and hexanone; alkyl esters of acetic, propionic, and butyric acids, such as ethyl acetate, butyl acetate, and amyl acetate; ethers, such as tetrahydrofuran, diethyl ether, and ethylene glycol and polyethylene glycol monoalkyl and dialkyl ethers such as cellosolves and carbitols; and, glycols such as ethylene glycol and propylene glycol; and mixtures thereof.

Any of commonly used azo or peroxide type polymerization initiators can be used for preparation of the macromonomer or the block copolymer provided it has solubility in the solution of the solvents and the monomer mixture, and has an appropriate half life at the temperature of polymerization. "Appropriate half life" as used herein is a half-life of about 10 minutes to 4 hours. Most preferred are azo type initiators such as 2,2'-azobis (isobutyronitrile), 2,2'-azobis (2,4-dimethylvaleronitrile), 2,2'-azobis (methylbutyronitrile), and 1,1'-azobis (cyanocyclohexane). Examples of peroxy based initiators are benzoyl peroxide, lauroyl peroxide, t-butyl peroxypivalate, t-butyl peroctoate which may also be used, provided they do not adversely react with the chain transfer agents under the reaction conditions for macromonomers.

Any of conventional acrylic monomers and optionally other ethylenically unsaturated monomers or monomer mixtures can be used to form the individual A, B and C blocks of the block copolymer. Depending on the preparation methods, certain monomers or monomer mixtures will work better than the others. In "macromonomer" approach, a preferred method of preparation for this invention, methacrylate monomers must be used. Specifically, each individual block must contain at least 70 mole percent of a methacrylate monomer or methacrylate monomer mixtures. More preferred is a composition containing at least 90 mole percent of a methacrylate monomer or methacrylate monomer mixtures. The other comonomers may be of the type of acrylate, acrylamide, methacrylamide, vinyl aromatics such as styrene, and vinyl esters.

For example, monomers that may be polymerized include at least one monomer selected from the group consisting of unsubstituted or substituted alkyl acrylates, such as those having 1-20 carbon atoms in the alkyl group; alkyl methacrylate such as those having 1-20 carbon atoms in the alkyl group; cycloaliphatic acrylates; cycloaliphatic methacrylates; aryl acrylates; aryl methacrylates; other ethylenically unsaturated monomers such as acrylonitriles, methacrylonitriles, acrylamides, methacrylamides, N-alkylacrylamides, N-alkylmethacrylamides, N,N- dialkylacrylamides, N, N-dialkylmethacrylamides; vinyl aromatics such as styrene, and a combination thereof. Functionalized monomers, such as monomers having crosslinkable functional groups and their relative concentrations can be especially useful in differentiating the blocks so each block can have different crosslink reactivity.

Examples of specific monomers or comonomers that have no special crosslinkable functional groups and may be used in this invention include various non-functional acrylic monomers such as methyl methacrylate, ethyl methacrylate, propyl methacrylate (all isomers), butyl methacrylate (all isomers), 2-ethylhexyl methacrylate; isobornyl methacrylate, methacrylonitrile, methyl acrylate, ethyl acrylate, propyl acrylate (all isomers), butyl acrylate (all isomers), 2-ethylhexyl acrylate, isobornyl acrylate, acrylonitrile, etc, and optionally other ethylenically unsaturated monomers, e.g., vinyl aromatics such as styrene, alphamethyl styrene, t-butyl styrene, and vinyl toluene.

In one embodiment, a diblock AB copolymer comprises a block A polymerized from a monomer mixture of methyl methacrylate/isobornyl methacrylate/hydroxybutyl acrylate (MMA/IBOMA/HBA); and a block B polymerized from a monomer mixture comprising hydroxypropyl methacrylate/butyl methacrylate/2-ethylhexyl methacrylate (HPMA/BMA/EHMA). In another embodiment, a triblock ABC copolymer comprises a block A polymerized from a monomer mixture of methyl methacrylat/isobornyl methacrylate/ hydroxybutyl acrylate (MMA/IBOMA/HBA); a block B polymerized from a monomer mixture of methyl methacrylate/ butyl methacrylate (MMA/BMA); and a block C polymerized from amonomer mixture of hydroxypropyl methacrylate/butyl methacrylate/2-ethylhexyl methacrylate (HPMA/BMA/EHMA).

The block copolymer can generally be part of a binder of a coating composition. The block copolymer can be, in the range of from about 1 to 95% by weight of the total weight of the binder.

In addition to the block copolymer described above, the coating composition can also include, as part of the binder, 0 to 98% by weight, preferably in the range of 20 to 95%, and even more preferably from 30 to 90% by weight of an acrylic polymer, polyester, alkyd resin, acrylic alkyd resin, cellulose acetate butyrate, an iminated acrylic polymer, ethylene vinyl acetate co-polymer, nitrocellulose, plasticizer or a combination thereof, all weight percentages being based on the total weight of the binder.

Useful acrylic polymers are conventionally polymerized from a monomer mixture that can include one or more of the following monomers: alkyl acrylate; alkyl methacrylate; hydroxy alkyl acrylate; hydroxy alkyl methacrylate; acrylic acid; methacrylic acid; styrene; alkyl amino alkyl acrylate; alkyl amino alkyl methacrylate, or mixtures thereof; and one or more of the following drying oils: vinyl oxazoline drying oil esters of linseed oil fatty acids, tall oil fatty acids, and tung oil fatty acids.

Suitable iminiated acrylic polymers can be obtained by reacting acrylic polymers having carboxyl groups with propylene imine.

Useful polyesters include the esterification product of an aliphatic or aromatic dicarboxylic acid, a polyol, a diol, an aromatic or aliphatic cyclic anhydride and a cyclic alcohol. One such polyester is the esterification product of adipic acid, trimethylol propane, hexanediol, hexahydrophathalic anhydride and cyclohexane dimethylol.

Other polyesters that are useful in the present invention are branched copolyester polyols. One particularly preferred branched polyester polyol is the esterification product of dimethylolpropionic acid, pentaerythritol and epsilon-caprolactone. These branched copolyester polyols and the preparation thereof are further described in WO 03/070843 published August 28, 2003, which is hereby incorporated by reference.

Suitable alkyd resins are the esterification products of a drying oil fatty acid, such as linseed oil and tall oil fatty acid, dehydrated castor oil, a polyhydric alcohol, a dicarboxylic acid and an aromatic monocarboxylic acid. One preferred alkyd resin is a reaction product of an acrylic polymer and an alkyd resin.

If the coating composition is to be used as a clearcoat for the exterior of automobiles and trucks, about 0.1 to 5% by weight, based on the weight of the total weight of the binder, of an ultraviolet light stabilizer or a combination of ultraviolet light stabilizers and absorbers can be added to improve the weatherability of the composition. These stabilizers include ultraviolet light absorbers, screeners, quenchers and specific hindered amine light stabilizers. Also, about 0.1 to 5% by weight, based on the total weight of the binder, of an antioxidant can be added. Most of the foregoing stabilizers are available from Ciba Specialty Chemicals, Tarrytown, New York.

Additional details of the foregoing additives are provided in US Patent No. 3,585,160, 4,242,243, 4,692,481, and US Re 31,309, which are hereby incorporated by reference.

If desired, the coating composition can be pigmented to form a colored mono coat, basecoat, primer or primer surfacer. Generally, pigments are used in a pigment to binder weight ratio (P/B) of 0.1/100 to 200/100; preferably, for base coats in a P/B of 1/100 to 50/100. If used as primer or primer surfacer higher levels of pigment are used, e.g., 50/100 to 200/100. The pigments can be added using conventional techniques, such as sand-grinding, ball milling, attritor grinding, two roll milling to disperse the pigments. The mill base is blended with the film-forming constituents.

Any of the conventional pigments used in coating compositions can be utilized, such as metallic oxides, metal hydroxide, metal flakes, chromates, such as lead chromate, sulfides, sulfates, carbonates, carbon black, silica, talc, china clay, phthalocyanine blues and greens, organo reds, organo maroons, pearlescent pigments and other organic pigments and dyes. If desired, chromate-free pigments, such as barium metaborate, zinc phosphate, aluminum triphosphate and mixtures thereof, can also be used.

Suitable flake pigments include bright aluminum flake, extremely fine aluminum flake, medium particle size aluminum flake, and bright medium coarse aluminum flake; mica flake coated with titanium dioxide pigment also known as pearl pigments. Suitable colored pigments include titanium dioxide, zinc oxide, iron oxide, carbon black, mono azo red toner, red iron oxide, quinacridone maroon, transparent red oxide, dioxazine carbazole violet, iron blue, indanthrone blue, chrome titanate, titanium yellow, mono azo permanent orange, ferrite yellow, mono azo benzimidazolone yellow, transparent yellow oxide, isoindoline yellow, tetrachloroisoindoline yellow, anthanthrone orange, lead chromate yellow, phthalocyanine green, quinacridone red, perylene maroon, quinacridone violet, pre-darkened chrome yellow, thio-indigo red, transparent red oxide chip, molybdate orange, and molybdate orange red.

The coating composition of the present invention comprises at least one volatile organic solvent as the liquid carrier to disperse and/or dilute the above ingredients and form a coating composition having the desired properties. The solvent or solvent blends are typically selected from the group consisting of aromatic hydrocarbons, such as, petroleum naphtha or xylenes; ketones, such as, methyl amyl ketone, methyl isobutyl ketone, methyl ethyl ketone or acetone; esters, such as butyl acetate or hexyl acetate; glycol ether esters, such as, propylene glycol monomethyl ether acetate; and alcohols, such as isopropanol and butanol. The amount of organic solvent added depends upon the desired solids level, desired rheological (e.g., spray) properties, as well as the desired amount of VOC of the coating composition.

The total solids level of the coating of the present invention can vary in the range of from 5 to 95%, preferably in the range of from 7 to 80% and more preferably in the range of from 10 to 60%, all percentages being based on the total weight of the crosslinkable coating composition.

A crosslinking agent can react with crosslinkable functional groups of the block copolymer to form a crosslinked polymeric network, herein referred to as crosslinked network.

Polyisocyanates can be used as the crosslinking agent. Suitable polyisocyanate can have on average 2 to 10, alternately 2.5 to 8 and further alternately 3 to 8 isocyanate functionalities. Typically the coating composition has, in the binder, a ratio of isocyanate groups on the polyisocyanate in the crosslinking agent to crosslinkable functional groups (e.g., hydroxyl and/or amine groups) of the block copolymer ranges from 0.25/1 to 3/1, alternately from 0.8/1 to 2/1, further alternately from 1/1 to 1.8/1.

Examples of suitable polyisocyanates include any of the conventionally used aromatic, aliphatic or cycloaliphatic di-, tri- or tetraisocyanates, including polyisocyanates having isocyanurate structural units, such as, the isocyanurate of hexamethylene diisocyanate and isocyanurate of isophorone diisocyanate; the adduct of 2 molecules of a diisocyanate, such as, hexamethylene diisocyanate; uretidiones of hexamethylene diisocyanate; uretidiones of isophorone diisocyanate or isophorone diisocyanate; isocyanurate of meta-tetramethylxylylene diisocyanate; and a diol such as, ethylene glycol.

Polyisocyanates functional adducts having isocyanaurate structural units can also be used, for example, the adduct of 2 molecules of a diisocyanate, such as, hexamethylene diisocyanate or isophorone diisocyanate, and a diol such as ethylene glycol; the adduct of 3 molecules of hexamethylene diisocyanate and 1 molecule of water (available under the trademark Desmodur® N from Bayer Corporation of Pittsburgh, Pennsylvania); the adduct of 1 molecule of trimethylol propane and 3 molecules of toluene diisocyanate (available under the trademark Desmodur® L from Bayer Corporation ); the adduct of 1 molecule of trimethylol propane and 3 molecules of isophorone diisocyanate or compounds, such as 1,3,5-triisocyanato benzene and 2,4,6-triisocyanatotoluene; and the adduct of 1 molecule of pentaerythritol and 4 molecules of toluene diisocyanate.

The coating composition can further comprise one or more catalysts to enhance crosslinking of the components on curing. Generally, the coating composition can comprise in the range of from 0.01 to 5% by weight, based on the total weight of the binder. Suitable catalysts for polyisocyanate can include one or more tin compounds, tertiary amines or a combination thereof. Suitable tin compounds include dibutyl tin dilaurate, dibutyl tin diacetate, stannous octoate, and dibutyl tin oxide. Dibutyl tin dilaurate is preferred. Suitable tertiary amines include triethylene diamine. One commercially available catalyst that can be used is Fastcat® 4202 dibutyl tin dilaurate sold by Elf-Atochem North America, Inc. Philadelphia, Pennsylvania. Carboxylic acids, such as acetic acid, may be used in conjunction with the above catalysts to improve the viscosity stability of two component coatings.

In use, a layer of the coating composition is typically applied to a substrate by conventional techniques, such as, spraying, electrostatic spraying, roller coating, dipping or brushing to form a coating layer. Spraying and electrostatic spraying are preferred application methods. When used as a pigmented coating composition, e.g., as a basecoat or a pigmented top coat, thickness of the coating layer can range from 10 to 85 micrometers, preferably from 12 to 50 micrometers. When used as a primer, thickness of the coating layer can range from 10 to 200 micrometers, preferably from 12 to 100 micrometers. When used as a clearcoat, thickness of the coating layer can be in the range of from 25 micrometers to 100 micrometers. The coating layer can be dried at ambient temperatures or can be dried upon application for about 2 to 60 minutes at elevated drying temperatures ranging from about 50°C to 100°C.

The coating composition of the present invention can be supplied in the form of a two-component coating composition in which a first component comprises the block copolymers having one or more crosslinkable functional groups and a second component comprises a crosslinking agent, for example, polyisocyanates. The containers are preferably sealed air tight to prevent degradation during storage. Typically, the first and the second components are stored in separate containers and mixed before use to form a pot mix. The mixing may be done, for example, in a mixing nozzle or in a container.

A layer of the pot mix is typically applied to a substrate. If used as a clearcoat, a layer is applied over a metal substrate, such as, automotive body, which is often pre-coated with other coating layers, such as, an electrocoat primer layer, a primer surfacer layer, a basecoat layer, or a combination thereof. The two- component coating composition may be dried and cured at ambient temperatures or at baking temperatures ranging from 80°C to 160°C for 10 to 60 minutes. The coating composition can also contain pigments and can be applied as a mono coat or as a basecoat layer over a primed substrate or as a primer.

The coating composition of the present invention is suitable for providing coatings on variety of substrates. Typical substrates, which may or may not be previously primed or sealed, for applying the coating composition of the present invention include automobile vehicle bodies, any and all items manufactured and painted by automobile sub-suppliers, frame rails, commercial trucks and truck bodies, including but not limited to utility vehicle bodies, ready mix concrete delivery vehicle bodies, waste hauling vehicle bodies, and fire and emergency vehicle bodies, as well as any potential attachments or components to such truck bodies, buses, farm and construction equipment, truck caps and covers, commercial trailers, consumer trailers, recreational vehicles, including but not limited to, motor homes, campers, conversion vans, vans, pleasure vehicles, pleasure craft snow mobiles, all terrain vehicles (ATV), personal watercraft, motorcycles, bicycles, boats, and aircraft. The substrate further includes industrial and commercial new construction and maintenance thereof; cement and wood floors; walls of commercial and residential structures, such office buildings and homes; amusement park equipment; concrete surfaces, such as parking lots and drive ways; asphalt and concrete road surface, wood substrates, marine surfaces; outdoor structures, such as bridges, towers; coil coating; railroad cars; printed circuit boards; machinery; OEM tools; signage; fiberglass structures; sporting goods; golf balls; and sporting equipment.

The coating composition of this invention can also be suitable as clear or pigmented coatings in industrial and maintenance coating applications.

These and other features and advantages of the present invention will be more readily understood, by those of ordinary skill in the art from the following examples. In the examples, all parts and percentages are on a weight basis unless otherwise noted.

**Testing Procedures**

**Swell Ratio**

The swell ratio of a free film (removed from a sheet of TPO - thermoplastic olefin) was determined by swelling the film in methylene chloride. The free film was placed between two layers of aluminum foil and using a LADD punch, a disc of about 3.5 mm in diameter was punched out of the film and the foil was removed from the film. The diameter of the unswollen film (Do) was measured using a microscope with a 10x magnification and a filar lens. Four drops of methylene chloride were added to the film and the film was allowed to swell for a few second and then a glass slide was placed over the film and the swollen film diameter ($D_s$) was measured. The swell ratio was then calculated as follow:

$$\text{Swell Ratio} = (D_s)^2/(D_o)^2$$

**Persoz Hardness Test**

The change in film hardness of the coating was measured with respect to time by using a Persoz hardness tester Model No. 5854 (ASTM D4366), supplied by Byk-Mallinckrodt, Wallingford, CT. The number of oscillations (referred to as Persoz number) were recorded.

**Fischer Hardness Test**

Hardness was measured using a Fischerscope® hardness tester (the measurement is in Newtons per square millimeter).

**Water Spot**

Water spot rating is a measure of how well the film is crosslinked early in the curing of the film. If water spot damage is formed on the film, this is an indication that the cure is not complete and further curing of the film is needed before the film can be wet sanded or buffed or moved from the spray both. The water spot rating is determined in the following manner.

Coated panels are laid on a flat surface and deionized water was applied with a pipette at 1 hour timed intervals. A drop about ½ inch in diameter was placed on the panel and allowed to evaporate. The spot on the panel was checked for deformation and discoloration. The panel was wiped lightly with cheesecloth wetted with deionized water, which was followed by lightly wiping the panel dry with the cloth. The panel was then rated on a scale of 1 to 10. Rating of 10 best - no evidence of spotting or distortion of discoloration, rating 9 - barely detectable, rating 8- slight ring, rating 7 - very slight discoloration or slight distortion, rating 6 - slight loss of gloss or slight discoloration, rating 5 - definite loss of gloss or discoloration, rating of 4 - slight etching or definite distortion, rating of 3 - light lifting, bad etching or discoloration, rating of 2 - definite lifting and rating of 1 - dissolving of the film.

**Cotton Tack Free Time**

Allow coated panel to dry for set period of time (e.g. 30 minutes). Drop a cotton ball from a height of 1 inch onto the surface of the panel and leave the cotton ball on the surface for a set time interval and invert panel. Repeat above until the time the cotton ball drops off of the panel on inversion and note that as the cotton tack free time.

**Gel Fraction**

Measured according to the procedure set forth in US Patent 6,221,494 col. 8 line 56 to col. 9 line 2 which procedure is hereby incorporated by reference.

**EXAMPLES**

The present invention is further defined in the following Examples. It should be understood that these Examples, while indicating preferred embodiments of the invention, are given by way of illustration only. From the above discussion and these Examples, one skilled in the art can ascertain the essential characteristics of this invention and can make various changes and modifications of the invention to adapt it to various uses and conditions.
The following block copolymers were prepared from the macromonomers approach.

## EXAMPLE 1

Preparation of HPMA/BMA/EHMA Macromonomer, 30/40/30% by weight

This example illustrates the preparation of a macromonomer with secondary hydroxyl groups that can be used to form a block A of a diblock AB copolymer. A 5-liter flask was equipped with a thermometer, stirrer, additional funnels, heating mantel, reflux condenser and a means of maintaining a nitrogen blanket over the reactants. The flask was held under nitrogen positive pressure and the following ingredients were employed (Table 1).

**Table 1.** Reaction ingredients.

| | Weight (gram) |
|---|---|
| **Portion 1** | |
| 2-Hydroxypropyl methacrylate (HPMA) | 117.00 |
| n-Butyl methacrylate (BMA) | 156.00 |
| 2-Ethylhexyl metacrylate (EHMA) | 117.00 |
| Methyl ethyl ketone | 181.60 |
| **Portion 2** | |
| Diaquabis(borondifluorodiphenyl glyoximato) cobaltate (II), Co(DPG-BF$_2$) | 0.0751 |
| Methyl ethyl ketone | 169.27 |
| **Portion 3** | |
| 2,2'-Azobis(methylbutyronitrile) (Vazo® 67 by DuPont Co., Wilmington, DE) | 11.26 |
| Methyl ethyl ketone | 122.91 |
| **Portion 4** | |
| Methyl ethyl ketone | 42.32 |
| **Portion 5** | |
| 2-Hydroxypropyl methacrylate (HPMA) | 565.50 |
| n-Butyl methacrylate (BMA) | 754.00 |
| 2-Ethylhexyl methacrylate (EHMA) | 565.50 |
| **Portion 6** | |
| Methyl ethyl ketone | 105.79 |
| **Portion 7** | |
| t-Butyl peroctoate (Elf Atochem North America, Inc., Philadelphia, PA) | 34.09 |
| Methyl ethyl ketone | 515.37 |
| **Portion 8** | |
| Methyl ethyl ketone | 42.32 |
| Total | 3500.01 |

Portion 1 mixture was charged to the flask. Portion 2 was prepared by dissolving the cobalt catalyst completely and the solution was charged to reactor also. The mixture was heated to reflux temperature and refluxed for about 20 minutes. Portion 3, (30.24%, 40.6 grams) was fed to the flask over 10 minutes and the reaction mixture was refluxed for another 10 minutes. The remainder of the Portion 3 (93.6 grams) was fed to the flask over 150 minutes while Portion 5 (12.5%, 235.6 grams) was simultaneously fed to the flask over 120 minutes. The Portion 4 was used to rinse the Portion 3 into the flask at the end of the feed. The reaction mixture was held at reflux temperature throughout the course of feeds and the reaction mixture was refluxed for another 2 hours. The remainder of the Portion 5 (1649.4 grams) and the Portion 7 were simultaneously fed into the flask over 180 minutes. The Portion 6 was used to rinse the Portion 5 into the flask at the end of the second feed. The Portion 8 was used to rinse the Portion 7 at the end of the feed. The reaction mixture was held at reflux temperature throughout the course of feeds and the reaction mixture was refluxed for another 120 minutes. The resin solution was cooled to room temperature and filled out.

The resulting macromonomer solution was a light yellow clear polymer solution and had a solid content of about 64.14% and a Gardner-Holtz viscosity of I. The macromonomer had a 6,283 Mw and 3,896 Mn.

## EXAMPLE 2

Preparation of an AB diblock copolymer MMA/IBOMA/HBA//HPMA/BMA/EHMA, 30/22/8//12/16/12 % by weight

This example shows the preparation of a diblock AB copolymer wherein the block B has more reactive primary hydroxyl groups and the block A contains less reactive secondary hydroxyl groups.

A 2-liter flask was equipped as in Example 1. The flask was held under nitrogen positive pressure and the following ingredients were employed (Table 2).

**Table 2.** Reaction ingredients.

|  | Weight (gram) |
|---|---|
| **Portion 1** |  |
| Macromonomer of Example 1 | 615.39 |
| Methyl ethyl ketone | 149.21 |
| **Portion 2** |  |
| Methyl methacrylate (MMA) | 300.00 |
| Isobornyl methacrylate (IBOMA) | 220.00 |
| 4-Hydroxybutyl acrylate (HBA) | 80.00 |
| **Portion 3** |  |
| t-Butyl peroctoate | 14.00 |
| Methyl ethyl ketone | 200.00 |
| **Portion 4** |  |
| t-butyl peroctoate | 1.40 |
| Methyl ethyl ketone | 20.00 |
| Total | 1600.00 |

Portion 1 mixture was charged to the flask and the mixture was heated to reflux temperature and refluxed for about 10 minutes. Portion 2 and Portion 3 were simultaneously added over 180 minutes while the reaction mixture was held at reflux temperature. The reaction mixture was refluxed for 30 minutes. The Portion 4 was then added in 10 minutes. The reaction mixture was refluxed for another 90 minutes.

After cooling, the resulting diblock AB copolymer solution was a clear polymer solution and had a solid content of about 62.52% and a Gardner-Holtz viscosity of W+1/2. The copolymer had a 13,242 Mw and 6,378 Mn.

## COMPARATIVE EXAMPLE 1

Preparation of a random copolymer MMA/IBOMA/HBA/HPMA/BMA/EHMA, 30/22/8/12/16/12 % by weight

This example shows the preparation of a random copolymer having exactly the same overall composition of MMA/IBOMA/HBA/HPMA/BMA/EHMA, 30/22/8/12/16/12 % by weight, as the diblock AB copolymer of Example 2.

A 2-liter flask was equipped as in Example 1. The flask was held under nitrogen positive pressure and the following ingredients were employed (Table 3).

**Table 3.** Reaction Ingredients.

|  | Weight (gram) |
|---|---|
| **Portion 1** |  |
| Methyl propyl ketone | 296.4 |

(continued)

| Portion 2 | |
|---|---|
| Methyl methacrylate (MMA) | 270.0 |
| Isobornyl methacrylate (IBOMA) | 198.0 |
| 4-Hydroxybutyl acrylate (HBA) | 72.0 |
| 2-Hydroxypropyl methacrylate (HPMA) | 108.0 |
| n-Butyl methacrylate (BMA) | 144.0 |
| 2-Ethylhexyl methacrylate (EHMA) | 108.0 |
| Portion 3 | |
| t-Butyl peroctoate | 43.0 |
| Methyl propyl ketone | 210.0 |
| Portion 4 | |
| t-Butyl peroctoate | 4.3 |
| Methyl propyl ketone | 21.0 |
| Portion 5 | |
| t-Butyl peroctoate | 4.3 |
| Methyl ethyl ketone | 21.0 |
| Total | 1500.0 |

Portion 1 mixture was charged to the flask and the mixture was heated to reflux temperature and refluxed for about 10 minutes. Portion 2 and Portion 3 were simultaneously added over 210 minutes while the reaction mixture was held at reflux temperature. The reaction mixture was refluxed for 30 minutes. Portion 4 was then added in 10 minutes. The reaction mixture was refluxed for another 30 minutes. Portion 5 was then added in 10 minutes and the reaction mixture was refluxed for another 90 minutes.

After cooling, the resulting random copolymer solution was a clear polymer solution and had a solid content of about 61.37% and a Gardner-Holtz viscosity of Y+1/2. The copolymer had a 12,223 Mw and 5,311 Mn.

## EXAMPLE 3

Coating Compositions: Curing and Property

### PART A: Curing Profile of the Coating Compositions

The coating compositions were prepared from the polymer of Example 2 and the Comparative Example 1 according to Table 4.

**Table 4.** Coating Compositions.

| | Coating Composition 1 | Coating Composition 2 |
|---|---|---|
| Portion 1 | Weight (gram) | Weight (gram) |
| Polymer of Example 2 | 100.00 | |
| Polymer of Comparative Example 1 | | 100.00 |
| Byk 301 (10% solution, Byk Chemie | 0.82 | 0.81 |
| dibutyltin dilaurate Catalyst a. | 1.03 | 1.01 |
| Butyl acetate | 45.40 | 41.91 |

(continued)

| Portion 2 | | |
|---|---|---|
| Tolonate HDT (Rhodia Inc.,) | 17.95 | 17.52 |
| Total | 165.20 | 161.25 |
| a. The catalyst is a 2% solution of dibutyltin dilaurate in butyl acetate. | | |

Portion 1 was prepared by mixing the polymer solution and the additives according to the amounts listed in the Table 4 above. The coating composition was activated by mixing Portion 1 well with Portion 2 crosslinking agent comprising polyisocyanates to produce a coating composition with an isocyanate (NCO) group to hydroxyl group ratio of 1.05:1. The resulting activated coating composition has 50% of solids containing 0.05% of Byk 301 and 250 ppm of the catalyst dibutyltin dilaurate based on the total weight of the resin solid. The coating composition was spread in a line on an upper edge of a potassium bromide plate using a pipette. A microscope glass slide was drawn on top of the composition across the plate with increasing force to create a thin film with a gradient of thickness. The potassium bromide plate was mounted on a holder and immediately put on a Nicolet 4700 FT-IR infrared spectrometer (manufactured by Thermo Electron Corporation) for measurement. The position of the potassium plate was adjusted for a desired thickness that gave an absorbance of about 0.8 to 1.4. The sample was measured at intervals to monitor the curing profile under ambient conditions up to 30 days for complete curing. Three more samples were prepared to study the effect of curing at elevated temperature of 60°C (140°F), 82.2°C (180°F) and 140.5°C (285°F). The results are recorded in the Table 5 below.

**Table 5.** Coating Composition Curing Profile.

| Time | Coating Composition 1 | | Coating Composition 2 | |
|---|---|---|---|---|
| | Accumulated % NCO conversion | % NCO conversion/hr | Accumulated% NCO conversion | %NCO conversion/hr |
| **Ambient condition** | | | | |
| 0.5 hr | 8.13 | 16.26 | 1.46 | 2.91 |
| 1 hr | 10.93 | 5.60 | 3.06 | 3.21 |
| 2 hrs | 15.02 | 4.09 | 6.45 | 3.39 |
| 4 hrs | 20.82 | 2.90 | 10.56 | 2.05 |
| 24 hrs | 44.76 | 1.20 | 32.00 | 1.07 |
| 7 days | 69.52 | 0.17 | 60.29 | 0.20 |
| 30 days | 82.40 | 0.02 | 75.52 | 0.03 |
| **Oven bake, 20 min. at 60°C (140°F)** | | | | |
| Immediately after | 25.69 | | 15.51 | |
| Plus 1 day | 45.00 | | 31.43 | |
| Plus 7 days | 65.41 | | 53.23 | |
| **Oven bake, 30 min. at 82.2°C (180°F)** | | | | |
| Immediately after | 45.07 | | 42.78 | |
| Plus 1 day | 50.89 | | 52.39 | |

(continued)

| | | | | |
|---|---|---|---|---|
| **Oven bake, 30 min. at 82.2°C (180°F)** | | | | |
| Plus 7 days | 64.62 | | 59.69 | |
| **Oven bake, 30 min. at 140.5°C (285°F)** | | | | |
| Immediately after | 83.74 | | 76.58 | |

The curing, also known as crosslinking reaction is measured by the conversion of the NCO groups through the disappearance of the absorption band at 2270 cm$^{-1}$ from the IR spectrum. The absorption band at 1685 cm$^{-1}$ is used as the internal standard. The curing profile of Coating Composition 1 is different from that of Coating Composition 2. Under the ambient condition, the Coating Composition 1 comprising the block copolymer of Example 2 exhibited higher reactivity towards the crosslinking agent throughout the course of curing, especially at the early stage of the curing, than the Coating Composition 2 comprising the random polymer of the same composition from the Comparative Example 1. Under the oven bake conditions, such as 60°C (140°F), 82.2°C (180°F) and 140.5°C (285°F), the same trends were recorded.

**PART B: Coating Properties**

The coating compositions were prepared and activated as in **PART A.** They were tested as described in **"Testing Procedures"** and the results are listed in Table 6 below. Coating 1 and Coating 2 were produced from the Coating Composition 1 and 2, respectively.

**Table 6.** Coating Properties.

| | | Coating 1 | Coating 2 |
|---|---|---|---|
| **Set 1: Air dry** | | | |
| Film thickness (mil) | | 2.5 | 2.5 |
| Cotton time (min) | | 60 | 60 |
| Water spot | 4 hrs | 7 | 7 |
| | 1 day | 9 | 8 |
| Perzos hardness | 4 hrs | 58 | 52 |
| | 1 day | 149 | 121 |
| Fischer hardness | 1 day | 51.13 | 31.02 |
| | 7 days | 107.10 | 42.78 |
| Swell ratio | 1 day | 2.209 | 2.564 |
| | 7 days | 1.780 | 1.942 |
| **Set 2: Air dry** | | | |
| Film thickness (mil) | | 3.6 | 2.5 |
| Fischer hardness | 1 day | 32.40 | 35.38 |
| | 7 days | 102.49 | 102.72 |
| **Set 3: bake 30 min at 140.5°C (285°F)** | | | |
| Fischer hardness | 4 hrs | 137.06 | 135.15 |
| | 7 days | 147.49 | 140.98 |

(continued)

| Set 3: bake 30 min at 140.5°C (285°F) | | | |
|---|---|---|---|
| Swell ratio | 4 hrs | 1.744 | 1.751 |
| | 7 days | 1.752 | 1.701 |
| Gel fraction | | 97.63 | 96.03 |

Under the air dry condition, the Coating 1 comprising the block AB copolymer from the Example 2 exhibited the desired coating properties faster than the comparative Coating 2 comprising the random polymer from the Comparative Example 1. Under the baking condition the differentiation is minimized. Once formed, the final crosslinked network from both copolymers appeared to be of the similar strength according to the gel fraction measurement.

## EXAMPLE 4

Preparation of HEMA/BMA/EHMA Macromonomer, 30/40/30 % by weight

This example illustrates the preparation of a macromonomer with primary hydroxyl groups. It can be used to form a block A of a triblock ABC copolymer. A 5-liter flask was equipped with a thermometer, stirrer, additional funnels, heating mantel, reflux condenser and a means of maintaining a nitrogen blanket over the reactants. The flask was held under nitrogen positive pressure and the following ingredients in Table 7 were employed.

**Table 7.** Reaction ingredients.

| | Weight (gram) |
|---|---|
| **Portion 1** | |
| 2-Hydroxyethyl methacrylate (HEMA) | 136.50 |
| n-Butyl methacrylate (BMA) | 182.00 |
| 2-Ethylhexyl metacrylate (EHMA) | 136.50 |
| Methyl ethyl ketone | 563.90 |
| **Portion 2** | |
| Diaquabis(borondifluorodiphenyl glyoximato) cobaltate (II), Co(DPG-BF$_2$) | 0.182 |
| Methyl ethyl ketone | 70.00 |
| **Portion 3** | |
| 2,2'-Azobis(methylbutyronitrile) (Vazo® 67, by DuPont Co., Wilminqton, DE) | 3.72 |
| Methyl ethyl ketone | 50.00 |
| **Portion 4** | |
| 2-Hydroxyethyl methacrylate (HEMA) | 546.00 |
| n-Butyl methacrylate (BMA) | 728.00 |
| 2-Ethylhexyl methacrylate (EHMA) | 546.00 |
| **Portion 5** | |
| 2,2'-Azobis(methylbutyronitrile) (Vazo® 67, by DuPont Co., Wilmington, DE) | 37.20 |
| Methyl ethyl ketone | 500.00 |

(continued)

| Portion 5 | |
|---|---|
| Total | 3500.00 |

Portion 1 mixture was charged to the flask. Portion 2 was prepared by dissolving the cobalt catalyst completely and the solution was charged to reactor also. The mixture was heated to reflux temperature and refluxed for about 20 minutes. Portion 3 was fed to the flask over 10 minutes and the reaction mixture was refluxed for another 10 minutes. Portion 4 was fed to the flask over 240 minutes while Portion 5 was simultaneously fed to the flask over 270 minutes. The reaction mixture was held at reflux temperature throughout the course of the feeds and the reaction mixture was refluxed for another 2 hours. The resin solution was cooled to room temperature and filled out.

The resulting macromonomer solution was a light yellow clear polymer solution and had a solid content of about 63.74% and a Gardner-Holtz viscosity of A1. The macromonomer had a 2,896 Mw and 1,818 Mn.

## EXAMPLE 5

Preparation of an AB diblock intermediate copolymer MMA/BMA//HEMA/BMA/EHMA, 40/20//12/16/12 % by weight

This example shows the preparation of a diblock AB copolymer intermediate wherein a second block B have no crosslink functional hydroxyl groups.

A 2-liter flask was equipped as in Example 1. The flask was held under nitrogen positive pressure and the following ingredients in Table 8 were employed.

**Table 8.** Reaction ingredients.

| | Weight (gram) |
|---|---|
| **Portion 1** | |
| Macromonomer of Example 4 | 615.39 |
| Methyl ethyl ketone | 118.11 |
| **Portion 2** | |
| Methyl methacrylate (MMA) | 400.00 |
| Butyl methacrylate (BMA) | 200.00 |
| **Portion 3** | |
| t-Butyl peroctoate | 14.00 |
| Methyl ethyl ketone | 240.00 |
| **Portion 4** | |
| t-butyl peroctoate | 1.40 |
| Methyl ethyl ketone | 24.00 |
| Total | 1612.90 |

The procedure of Example 2 was repeated to produce a diblock copolymer solution. It was a clear polymer solution and had a solid content of about 62.46% and a Gardner-Holtz viscosity of Q. The copolymer had a 6,594 Mw and 3,985 Mn.

## EXAMPLE 6

Preparation of an ABC triblock copolymer MMA/IBMA/HBA//MMA/BMA//HEMA/BMA/EHMA, 20/20/10//20/10//6/8/6% by weight

This example shows the preparation of a triblock ABC copolymer containing primary hydroxyl groups on the block A, no specific crosslink functional groups on the center block B, and primary hydroxyl groups of a higher reactivity on a block C. The triblock copolymer can be prepared from the diblock AB intermediate copolymer prepared in Example 5.

A 2-liter flask was equipped as in Example 1. The flask was held under nitrogen positive pressure and the following ingredients in Table 9 were employed.

**Table 9.** Reaction ingredients.

|  | Weight (gram) |
|---|---|
| **Portion 1** | |
| Diblock intermediate of Example 5 | 806.45 |
| Methyl ethyl ketone | 80.81 |
| **Portion 2** | |
| Methyl methacrlate (MMA) | 200.00 |
| Isobutyl methacrylate (IBMA) | 200.00 |
| Hydroxybutyl acrylate (HBA) | 100.00 |
| **Portion 3** | |
| t-Butyl peroctoate (Elf Atochem North America, Inc., Philadelphia, PA) | 14.00 |
| Methyl ethyl ketone | 240.00 |
| **Portion 4** | |
| t-Butyl peroctoate (Elf Atochem North America, Inc., Philadelphia, PA) | 1.40 |
| Methyl ethyl ketone | 24.00 |
| Total | 1666.66 |

The procedure of Example 5 was repeated to produce the triblock ABC copolymer solution. It was a clear solution and had a solid content of about 60.15% and a Gardner-Holtz viscosity of W. The triblock ABC copolymer had a relatively narrow distribution of molecular weight with 12,263 Mw and 5,921 Mn, and a Tg of 50.5°C.

## COMPARATIVE EXAMPLE 2

Preparation of a random copolymer MMA/IBMA/BMA/EHMA/HEMA/HBA 40/18/20/6/6/10% by weight

This example shows the preparation of a random copolymer having the same overall composition of MMA/IBMA/BMA/EHMA/HEMA/HBA 40/18/20/6/6/10% by weight as the triblock ABC copolymer of Example 6.

A 2-liter flask was equipped as in Example 1. The flask was held under nitrogen positive pressure and the following ingredients in Table 10 were employed.

**Table 10.** Reaction ingredients.

|  | Weight (gram) |
|---|---|
| **Portion 1** | |
| Methyl propyl ketone | 254.4 |
| **Portion 2** | |
| Methyl methacrylate (MMA) | 360.0 |
| n-Butyl methacrylate (BMA) | 162.0 |
| Isobutyl methacrylate (IBMA) | 180.0 |
| 2-Ethylhexyl methacrylate (EHMA) | 54.0 |
| 2-Hydroxyethyl methacrylate (HEMA) | 54.0 |

(continued)

| Portion 2 | |
|---|---|
| 4-Hydroxybutyl acrylate (HBA) | 90.0 |
| **Portion 3** | |
| t-Butyl peroctoate | 52.0 |
| Methyl propyl ketone | 220.0 |
| **Portion 4** | |
| t-Butyl peroctoate | 5.2 |
| Methyl propyl ketone | 22.0 |
| **Portion 5** | |
| t-Butyl peroctoate | 5.2 |
| Methyl ethyl ketone | 22.0 |
| Total | 1480.8 |

The procedure of the Comparative Example 1 was repeated to produce a random copolymer solution. It was a clear polymer solution and had a solid content of about 61.80% and a Gardner-Holtz viscosity of X+1/2. The copolymer had a 12,449 Mw and 5,141 Mn.

## EXAMPLE 7

Coating Compositions: Curing and Coating Property

**PART A: Curing Profiles of Coating Compositions**

Coating compositions in Table 11 were prepared from the polymer of Example 6 and the Comparative example 2.

**Table 11**. Coating Compositions.

| | Coating Composition 3 | Coating Composition 4 |
|---|---|---|
| | Weight (gram) | Weight (gram) |
| **Portion 1** | | |
| Polymer of Example 6 | 100.00 | |
| Polymer of Comparative Example 2 | | 100.00 |
| Byk 301 (10% solution, Byk Chemie | 0.79 | 0.79 |
| Catalyst [a.] | 0.99 | 0.99 |
| Butyl acetate | 41.63 | 42.12 |
| **Portion 2** | | |
| Tolonate HDT (Rhodia Inc.,) | 14.85 | 14.91 |
| Total | 158.26 | 158.81 |
| a. The catalyst is a 2% solution of dibutyltin dilaurate in butyl acetate. | | |

The coating compositions were prepared and activated as described in Example 3. The coating samples were prepared on the potassium bromide plates, cured under various conditions, and the infrared spectra were measured in the same conditions as described in Example 3. The results are recorded in Table 12 below.

Table 12. Curing Profiles.

| Time | Coating Composition 3 | | Coating Composition 4 | |
|---|---|---|---|---|
| | Accumulated % NCO conversion | % NCO conversion/hr | Accumulated % NCO conversion | % NCO conversion/hr |
| **Ambient condition** | | | | |
| 0.5 hr | 13.54 | 27.08 | 12.68 | 25.36 |
| 1 hr | 18.24 | 9.40 | 16.78 | 8.21 |
| 2 hrs | 25.26 | 7.03 | 24.42 | 7.63 |
| 4 hrs | 39.60 | 7.17 | 32.81 | 4.20 |
| 24 hrs | 60.96 | 1.07 | 60.85 | 1.40 |
| 7 days | 71.56 | 0.07 | 80.70 | 0.14 |
| 30 days | 83.88 | 0.02 | 87.58 | 0.01 |
| **Oven bake, 20 min. at 60°C (140°F)** | | | | |
| Immediately after | 40.94 | | 55.41 | |
| Plus 1 day | 54.54 | | 61.15 | |
| Plus 7 days | 71.00 | | 83.30 | |
| **Oven bake, 30 min. at 82.2°C (180°F)** | | | | |
| Immediately after | 69.86 | | 74.72 | |
| Plus 1 day | 70.58 | | 73.45 | |
| Plus 7 days | 77.90 | | 88.77 | |
| **Oven bake, 30 min. at 140.5°C (285°F)** | | | | |
| Immediately after | 100.00 | | 100.00 | |

The curing profiles of the two coating compositions were very similar and both very fast under the ambient conditions. The random copolymer appeared to be more reactive under the baked conditions. Both polymers had very reactive primary hydroxyl groups especially the hydroxylbutyl acrylate. The differentiation of the polymer structures was minimal and the curing properties of both systems were dominated by the highly reactive butylhydroxyl groups.

**PART B: Properties**

The coating compositions were prepared and activated as in PART A. The resulted coatings were tested as described in "**Test Procedures**" and the results are listed in Table 13 below.

Table 13. Coating Properties.

| | | Coating Composition 3 | Coating Composition 4 |
|---|---|---|---|
| **Set 1: Air dry** | | | |
| Film thickness (mil) | | 2.6 | 1.7 |
| Cotton time (min) | | 60 | 60 |

(continued)

| | | Coating Composition 3 | Coating Composition 4 |
|---|---|---|---|
| **Set 1: Air dry** | | | |
| Water spot | 4 hrs | 8 | 10 |
| | 1 day | 10 | 10 |
| Perzos hardness | 4 hrs | 41 | 68 |
| | 1 day | 148 | 162 |
| Fischer hardness | 1 day | 36.05 | 58.83 |
| | 7 days | 95.93 | 126.23 |
| | 30 days | 109.16 | 129.36 |
| Swell ratio | 1 day | 2.136 | 1.956 |
| | 7 days | 1.805 | 1.879 |
| | 30 days | 1.852 | 1.823 |
| **Set 2: Air dry** | | | |
| Film thickness (mil) | | 2.6 | 2.5 |
| Fischer hardness | 1 day | 40.23 | 57.53 |
| | 7 days | 98.16 | 79.57 |
| | 30 days | 102.73 | 111.38 |
| **Set 3: bake 30 min at 140.5°C (285°F)** | | | |
| Fischer hardness | 4 hrs | 150.87 | 149.53 |
| | 7 days | 156.88 | 152.47 |
| | 30 days | 155.90 | 149.45 |
| Swell ratio | 4 hrs | 1.848 | 1.758 |
| | 7 days | 1.830 | 1.772 |
| | 30 days | 1.798 | 1.793 |
| Gel fraction | 7 days | 96.75 | 95.87 |
| | 30 days | 97.28 | 97.48 |

While the difference in the film thickness in the Set 1 air dry experiment should be a consideration, the data would suggest that the block copolymer builds the hardness at a slower rate than the comparative random copolymer. Under the baking condition the differentiation is minimized. The final crosslinked network formation from both polymers appeared to be of the similar strength according to the gel fraction measurement.

## EXAMPLE 8

Preparation of HPMA/BMA/EHMA Macromonomer, 40/40/20 % by weight

This example illustrates the preparation of a macromonomer with secondary hydroxyl groups. It can be used to form a block A of a triblock ABC copolymer. A 5-liter flask was equipped as in Example 1. The flask was held under nitrogen positive pressure and the following ingredients in Table 14 were employed.

**Table 14**. Reaction Ingredients.

| | Weight (gram) |
|---|---|
| **Portion 1** | |
| 2-Hydroxypropyl methacrylate (HPMA) | 182.00 |
| n-Butyl methacrylate (BMA) | 182.00 |
| 2-Ethylhexyl metacrylate (EHMA) | 91.00 |
| Methyl ethyl ketone | 571.80 |
| **Portion 2** | |
| Diaquabis(borondifluorodiphenyl glyoximato) cobaltate (II), Co(DPG-BF$_2$) | 0.205 |
| Methyl ethyl ketone | 70.00 |
| **Portion 3** | |
| 2,2'-Azobis(methylbutyronitrile) (Vazo® 67 by DuPont Co., Wilmington, DE) | 3.00 |
| Methyl ethyl ketone | 50.00 |
| **Portion 4** | |
| 2-Hydroxypropyl methacrylate (HPMA) | 728.00 |
| n-Butyl methacrylate (BMA) | 728.00 |
| 2-Ethylhexyl methacrylate (EHMA) | 364.00 |
| **Portion 5** | |
| 2,2'-Azobis(methylbutyronitrile) (Vazo® 67 by DuPont Co., Wilmington, DE) | 30.00 |
| Methyl ethyl ketone | 500.00 |
| Total | 3500.01 |

The procedure of Example 1 was repeated. The resulting macromonomer solution was a light yellow clear polymer solution and had a solid content of about 65.71% and a Gardner-Holtz viscosity of J. The macromonomer had a 5,918 Mw and 3,684 Mn.

## EXAMPLE 9

Preparation of a diblock AB intermediate copolymer MMA/BMA//HPMA/BMA/EHMA, 30/20//20/20/10 % by weight

This example shows the preparation of a diblock AB copolymer having a second block B with no crosslinkable functional groups.

A 2-liter flask was equipped as in Example 1. The flask was held under nitrogen positive pressure and the following ingredients in Table 15 were employed.

**Table 15.** Reaction Ingredients.

| Portion 1 | Weight (gram) |
|---|---|
| Macromonomer of Example 8 | 769.23 |
| Methyl ethyl ketone | 54.92 |
| **Portion 2** | |
| Methyl methacrylate (MMA) | 300.00 |
| Butyl methacrylate (BMA) | 200.00 |

(continued)

| Portion 3 | |
|---|---|
| t-Butyl peroctoate | 12.50 |
| Methyl ethyl ketone | 250.00 |
| Portion 4 | |
| t-butyl peroctoate | 1.25 |
| Methyl ethyl ketone | 25.00 |
| Total | 1612.90 |

The procedure of Example 2 was repeated to produce a diblock AB copolymer solution. It was a clear polymer solution and had a solid content of about 63.02% and a Gardner-Holtz viscosity of R+1/2. The copolymer had a 8,893 Mw and 5,463 Mn.

## EXAMPLE 10

Preparation of an ABC triblock copolymer MMA/IBOMA/HBA//MMA/BMA//HPMA/BMA/EHMA. 20/12/8//18/12//12/12/6 % by weight

This example shows the preparation of a triblock ABC copolymer containing secondary hydroxyl groups on the block A, no crosslinkable functional groups on the center block B, and primary hydroxyl groups of a higher reactivity on the block C.

A 2-liter flask was equipped as in Example 1. The flask was held under nitrogen positive pressure and the following ingredients in Table 16 were employed.

**Table 16**. Reaction Ingredients.

| Portion 1 | Weight (gram) |
|---|---|
| Portion 2 | |
| Diblock AB intermediate of Example 9 | 967.74 |
| Methyl ethyl ketone | 65.17 |
| Methyl methacrlate (MMA) | 200.00 |
| Isobornyl methacrylate (IBOMA) | 120.00 |
| Hydroxybutyl acrylate (HBA) | 80.00 |
| Portion 3 | |
| t-Butyl peroctoate (Elf Atochem North America, Inc., Philadelphia, PA) - | 12.50 |
| Methyl ethyl ketone | 200.00 |
| Portion 4 | |
| t-Butyl peroctoate (Elf Atochem North America, Inc., Philadelphia, PA) | 1.25 |
| Methyl ethyl ketone | 20.00 |
| Total | 1666.66 |

The procedure of Example 5 was repeated to produce the triblock ABC copolymer solution. It was a clear solution and had a solid content of about 61.37% and a Gardner-Holtz viscosity of V. The triblock copolymer had a relatively narrow distribution of molecular weight with 13,794 Mw and 6,818 Mn, and a Tg of 52.4°C.

## COMPARATIVE EXAMPLE 3

Preparation of a random copolymer MMA/IBOMA/BMA/EHMA/HPMA/HBA 38/12/24/6/12/8% by weight

This example shows the preparation of a random copolymer having exactly the same overall composition as the triblock ABC copolymer of Example 10.

A 2-liter flask was equipped as in Example 1. The flask was held under nitrogen positive pressure and the following ingredients in Table 17 were employed.

**Table 17**. Reaction ingredients.

| Portion 1 | Weight (gram) |
|---|---|
| Methyl propyl ketone | 302.4 |
| **Portion 2** | |
| Methyl methacrylate (MMA) | 342.0 |
| n-Butyl methacrylate (BMA) | 216.0 |
| Isobornyl methacrylate (IOBMA) | 108.0 |
| 2-Ethylhexyl methacrylate (EHMA) | 54.0 |
| Hydroxypropyl methacrylate (HPMA) | 108.0 |
| 4-Hydroxybutyl acrylate (HBA) | 72.0 |
| **Portion 3** | |
| t-Butyl peroctoate | 48.0 |
| Methyl propyl ketone | 200.0 |
| **Portion 4** | |
| t-Butyl peroctoate | 4.8 |
| Methyl propyl ketone | 20.0 |
| **Portion 5** | |
| t-Butyl peroctoate | 4.8 |
| Methyl ethyl ketone | 20.0 |
| Total | 1500.0 |

The procedure of the Comparative Example 1 was repeated to produce a random copolymer solution. It was a clear polymer solution and had a solid content of about 62.19% and a Gardner-Holtz viscosity of V+1/2. The copolymer had a 13,195 Mw and 5,466 Mn.

## EXAMPLE 11

Coating Compositions: Curing Property

### PART A: Curing Profiles of Coating Compositions

Coating compositions in Table 18 were prepared from the polymer of Example 10 and the Comparative Example 3.

**Table 18**. Coating Compositions.

| | Coating Composition 5 | Coating Composition 6 |
|---|---|---|
| | Weight (gram) | Weight (gram) |
| **Portion 1** | | |
| Polymer of Example 10 | 100.00 | |
| Polymer of Comparative Example 3 | | 100.00 |
| Byk 301 (10% solution, Byk Chemie | 0.78 | 0.79 |
| Catalyst [a.] | 0.98 | 0.99 |
| Butyl acetate | 38.24 | 40.08 |

(continued)

| Portion 2 | | |
|---|---|---|
| Tolonate HDT (Rhodia Inc.,) | 17.07 | 17.29 |
| Total | 157.07 | 159.15 |
| a. The catalyst is a 2% solution of dibutyltin dilaurate in butyl acetate. | | |

The coating compositions were prepared and activated as described in Example 3. The coating samples were prepared on the potassium bromide plates, cured under various conditions, and the infrared spectra were measured in the same conditions as described in Example 3.
The results are recorded in Table 19 below.

**Table 19**. Curing Profiles.

| Time | Coating Composition 5 | | Coating Composition 6 | |
|---|---|---|---|---|
| | Accumulated % NCO conversion | % NCO conversion/ hr | Accumulated % NCO conversion | % NCO conversion/ hr |
| **Ambient condition** | | | | |
| 0.5 hr | 9.22 | 18.44 | 13.80 | 27.59 |
| 1 hr | 13.97 | 9.49 | 15.99 | 4.39 |
| 2 hrs | 21.42 | 7.45 | 23.68 | 7.69 |
| 4 hrs | 27.31 | 2.95 | 30.53 | 3.43 |
| 24 hrs | 51.12 | 1.19 | 53.11 | 1.13 |
| 7 days | 79.23 | 0.20 | 80.15 | 0.19 |
| **Oven bake, 20 min. at 60°C (140°F)** | | | | |
| Immediately after | 24.65 | | 28.73 | |
| Plus 1 day | 45.43 | | 46.41 | |
| Plus 7 days | 67.52 | | 67.85 | |
| **Oven bake, 30 min. at 82.2°C (180°F)** | | | | |
| Immediately after | 42.23 | | 41.36 | |
| Plus 1 day | 48.01 | | 46.21 | |
| Plus 7 days | 63.89 | | 68.30 | |
| **Oven bake, 30 min. at 140.5°C (285°F)** | | | | |
| Immediately after | 74.02 | | 66.38 | |

Under air dry condition, the triblock copolymer of Example 10 appeared to crosslink at a much slower rate than the random copolymer control at the early stage, but caught up and produced similar conversion at about the end of 24 hours. The differentiation is minimized when cured at an elevated temperature. It also appeared that the curing reaction slowed down significantly at about 40% conversion when the more reactive hydroxyl butyl groups were almost completely consumed. It would be obvious that at this point the network could have very different patterns between the two systems.

While the crosslinked points were randomly and statistically distributed along the polymer chain in the random copolymer system, the triblock copolymer was predominately crosslinked only on one end of the polymer chain. The rest of the polymer chain remained flexible.

## EXAMPLE 12

Preparation of an AB diblock intermediate copolymer MMA/BMA//HPMA/BMA/EHMA, 20/20//24/24/12 % by weight

This example shows the preparation of adding a second block B having no crosslinkable functional groups.
A 2-liter flask was equipped as in Example 1. The flask was held under nitrogen positive pressure and the following ingredients in Table 20 were employed.

Table 20. Reaction Ingredients.

| Portion 1 | Weight (gram) |
| --- | --- |
| Macromonomer of Example 8 | 1846.15 |
| Methyl ethyl ketone | 112.15 |
| Portion 2 | |
| Methyl methacrylate (MMA) | 400.00 |
| Butyl methacrylate (BMA) | 400.00 |
| Portion 3 | |
| t-Butyl peroctoate | 25.00 |
| Methyl ethyl ketone | 400.00 |
| Portion 4 | |
| t-butyl peroctoate | 2.50 |
| Methyl ethyl ketone | 40.00 |
| Total | 3225.80 |

The procedure of Example 2 was repeated to produce a diblock AB copolymer solution. It was a clear polymer solution and had a solid content of about 62.60% and a Gardner-Holtz viscosity of N. The copolymer had a 7,694 Mw and 4,861 Mn.

## EXAMPLE 13

Preparation of a triblock ABC copolymer MMA/IBOMA/t-BAEMA//MMA/BMA//HPMA/BMA/EHMA, 20/14/6//12/12// 14.4/14.4/7.2% by weight

This example shows the preparation of a triblock ABC copolymer containing secondary hydroxyl groups on the block A, no crosslinkable functional group on the center block B, and secondary amine groups on block C.
A 2-liter flask was equipped as in Example 1. The flask was held under nitrogen positive pressure and the following ingredients in Table 21 were employed.

Table 21. Reaction Ingredients.

| Portion 1 | Weight (gram) |
| --- | --- |
| Diblock intermediate of Example 12 | 967.74 |
| Methyl ethyl ketone | 65.17 |
| Portion 2 | |
| Methyl methacrlate (MMA) | 200.00 |
| Isobornyl methacrylate (IBOMA) | 140.00 |
| t-Butylaminoethyl methacrylate (t-BAEMA) | 60.00 |

(continued)

| | |
|---|---|
| **Portion 3** | |
| t-Butyl peroctoate (Elf Atochem North America, Inc., Philadelphia, PA) | 12.50 |
| Methyl ethyl ketone | 200.00 |
| **Portion 4** | |
| t-Butyl peroctoate (Elf Atochem North America, Inc., Philadelphia, PA) | 1.25 |
| Methyl ethyl ketone | 20.00 |
| **Total** | **1666.66** |

The procedure of Example 5 was repeated to produce the triblock ABC copolymer solution. It was a clear, slightly yellow solution and had a solid content of about 61.55% and a Gardner-Holtz viscosity of W. The triblock copolymer had a relatively narrow distribution of molecular weight with 10,692 Mw and 5,750 Mn, and a Tg of 59.3C.

## COMPARATIVE EXAMPLE 4

Preparation of a random copolymer MMA/IBOMA/t-BAEMA/BMA/EHMA/HPMA 32/14/6/26.4/7.2/14.4% by weight

This example shows the preparation of a random copolymer having exactly the same overall composition as the triblock ABC copolymer of Example 13.

A 2-liter flask was equipped as in Example 1. The flask was held under nitrogen positive pressure and the following ingredients in Table 22 were employed. -

**Table 22**. Reaction ingredients.

| Portion 1 | Weight (gram) |
|---|---|
| Methyl propyl ketone | 331.86 |
| **Portion 2** | |
| Methyl methacrylate (MMA) | 320.0 |
| n-Butyl methacrylate (BMA) | 264.0 |
| Isobornyl methacrylate (IOBMA) | 140.0 |
| 2-Ethylhexyl methacrylate (EHMA) | 72.0 |
| Hydroxypropyl methacrylate (HPMA) | 144.0 |
| t-Butylaminoethyl methacrylate (t-BAEMA) | 60.0 |
| **Portion 3** | |
| t-Butyl peroctoate | 59.0 |
| Methyl propyl ketone | 220.0 |
| **Portion 4** | |
| t-Butyl peroctoate | 5.9 |
| Methyl propyl ketone | 22.0 |
| **Portion 5** | |
| t-Butyl peroctoate | 5.9 |

(continued)

| Portion 5 | |
|---|---|
| Methyl ethyl ketone | 22.0 |
| Total | 1666.66 |

The procedure of the Comparative Example 1 was repeated to produce a random copolymer solution. It was a yellow clear polymer solution and had a solid content of about 61.67% and a Gardner-Holtz viscosity of X. The copolymer had a 9,577 Mw and 4,274 Mn.

## EXAMPLE 14

Coating Compositions: Curing Property

### PART A: Curing Profiles of Coating Compositions

Coating compositions in Table 23 were prepared from the polymer of Example 13 and the Comparative example 4.

**Table 23**. Coating Compositions.

| | Coating Composition 7 | Coating Composition 8 |
|---|---|---|
| | Weight (gram) | Weight (gram) |
| **Portion 1** | | |
| Polymer of Example 13 | 100.00 | |
| Polymer of Comparative Example 4 | | 100.00 |
| Byk 301 (10% solution, Byk Chemie | 0.78 | 0.78 |
| Butyl acetate | 38.80 | 39.07 |
| **Portion 2** | | |
| Tolonate HDT (Rhodia Inc.,) | 16.32 | 16.35 |
| Total | 155.90 | 156.20 |

The coating compositions were prepared and activated as described in Example 3. No catalyst was used because of the high reactivity of the secondary amine groups. The coating samples were prepared on the potassium bromide plates, cured under various conditions, and the infrared spectra were measured in the same conditions as described in Example 3.
The results are recorded in Table 24 below.

**Table 24**. Curing Profiles.

| Time | Coating Composition 7 | | Coating Composition 8 | |
|---|---|---|---|---|
| | Accumulated % NCO conversion | % NCO conversion/hr | Accumulated % NCO conversion | % NCO conversion/hr |
| **Ambient condition** | | | | |
| Immediately after | 23.53 | | 22.79 | |
| 0.5 hr | 25.74 | 51.48 | 23.46 | 46.92 |
| 1 hr | 26.04 | 0.61 | 24.31 | 1.70 |
| 2 hrs | 26.04 | 0.00 | 26.25 | 1.94 |
| 4 hrs | 25.78 | 0.00 | 24.90 | 0.00 |

(continued)

| Time | Coating Composition 7 | | Coating Composition 8 | |
|---|---|---|---|---|
| | Accumulated % NCO conversion | % NCO conversion/hr | Accumulated % NCO conversion | % NCO conversion/hr |
| Ambient condition | | | | |
| 24 hrs | 38.59 | 0.64 | 43.18 | 0.91 |
| 7 days | 69.17 | 0.21 | 72.68 | 0.21 |

Under the air dry condition, both the triblock copolymer of Example 13 and the random copolymer control crosslinked extremely rapidly until almost all of the secondary amine groups were consumed ( about 25% conversion). The crosslinking reaction then became very slow showing characteristics of the secondary hydroxyl groups curing without the catalyst. Similar to the comparison in Example 11, at the stage where only the secondary amine groups were reacted the crosslinked points were randomly and statistically distributed along the polymer chain in the random copolymer system. The triblock copolymer was predominately crosslinked only on one end of the polymer chain. The rest of the polymer chain remained flexible.

## EXAMPLE 15

Preparation of HPMA/BMA/EHMA Macromonomer, 30/40/30 % by weight

The procedure of Example 4 was repeated with 0.228 gm of Diaquabis(borondifluorodiphenyl glyoximato) cobaltate (II), Co(DPG-BF$_2$) catalyst and with hydroxylpropyl methacrylate (HPMA) in place of 2-hydroxylethyl methacrylate (HEMA). The resulting macromonomer solution was a light yellow clear polymer solution and had a solid content of about 64.45% and a Gardner-Holtz viscosity of A. The macromonomer had a 3,327 Mw and 2,069 Mn.

## EXAMPLE 16

Preparation of a diblock AB intermediate copolymer MMA/BMA/t-BAEMA//HPMA/BMA/EHMA, 20/10/20//15/20/15 % by weight

This example shows the preparation of adding a block B having secondary amine groups.
A 2-liter flask was equipped as in Example 1. The flask was held under nitrogen positive pressure and the following ingredients in Table 25 were employed.

Table 25. Reaction Ingredients.

| Portion 1 | Weight (gram) |
|---|---|
| Macromonomer of Example 15 | 769.23 |
| Methyl ethyl ketone | 66.48 |
| Portion 2 | |
| Methyl methacrylate (MMA) | 200.00 |
| Butyl methacrylate (BMA) | 100.00 |
| t-Butylaminoethyl methacrylate (t-BAEMA) | 200.00 |
| Portion 3 | |
| t-Butyl peroctoate | 12.00 |
| Methyl ethyl ketone | 240.00 |

(continued)

| Portion 4 | |
|---|---|
| t-butyl peroctoate | 1.20 |
| Methyl ethyl ketone | 24.00 |
| Total | 1612.91 |

The procedure of Example 2 was repeated to produce a diblock copolymer solution. It was a slightly yellow clear polymer solution and had a solid content of about 62.54% and a Gardner-Holtz viscosity of I+1/2. The copolymer had a 6,265 Mw and 3,775 Mn.

## EXAMPLE 17

Preparation of an ABA triblock copolymer MMA/BMA/HPMA//MMA/BMA/t-BAEMA//HPMA/BMA/EHMA, 24/30/6// 616/8//6/8/6% by weight

This example shows the preparation of a triblock ABA copolymer containing secondary hydroxyl groups on both end blocks, and secondary amine groups on the center B block.

A 2-liter flask was equipped as in Example 1. The flask was held under nitrogen positive pressure and the following ingredients in Table 26 were employed.

**Table 26.** Reaction Ingredients.

| Portion 1 | Weight (gram) |
|---|---|
| Diblock intermediate of Example 15 | 645.16 |
| Methyl ethyl ketone | 142.10 |
| **Portion 2** | |
| Methyl methacrlate (MMA) | 240.00 |
| Butyl methacrylate (IBOMA) | 300.00 |
| Hydroxypropyl methacrylate (HPMA) | 60.00 |
| **Portion 3** | |
| t-Butyl peroctoate (Elf Atochem North America, Inc., Philadelphia, PA) | 14.00 |
| Methyl ethyl ketone | 240.00 |
| **Portion 4** | |
| t-Butyl peroctoate (Elf Atochem North America, Inc., Philadelphia, PA) | 1.40 |
| Methyl ethyl ketone | 24.00 |
| Total | 1666.66 |

The procedure of Example 5 was repeated to produce the triblock ABA copolymer solution. It was a clear, slightly yellow solution and had a solid content of about 60.89% and a Gardner-Holtz viscosity of U+1/2. The triblock copolymer had a relatively narrow distribution of molecular weight with 13,170 Mw and 7,497 Mn, and a Tg of 56.6C.

## COMPARATIVE EXAMPLE 5

Preparation of a random copolymer BMA/EHMA/HPMA/MMA/t-BAEMA 38/36/12/6/8% by weight

This example shows the preparation of a random copolymer having exactly the same overall composition as the triblock ABC copolymer of Example 17.

A 2-liter flask was equipped as in Example 1. The flask was held under nitrogen positive pressure and the following ingredients in Table 27 were employed.

**Table 27.** Reaction ingredients.

| Portion 1 | Weight (gram) |
|---|---|
| Methyl ethyl ketone | 318.66 |
| **Portion 2** | |
| n-Butyl methacrylate (BMA) | 380.0 |
| Methyl methacrylate (MMA) | 60.0 |
| 2-Ethylhexyl methacrylate (EHMA) | 360.0 |
| Hydroxypropyl methacrylate (HPMA) | 120.0 |
| t-Butylaminoethyl methacrylate (t-BAEMA) | 80.0 |
| **Portion 3** | |
| Vazo 67 | 50.0 |
| Methyl ethyl ketone | 240.0 |
| **Portion 4** | |
| Vazo 67 | 5.0 |
| Methyl ethyl ketone | 24.0 |
| **Portion 5** | |
| Vazo 67 | 5.0 |
| Methyl ethyl ketone | 24.0 |
| Total | 1666.66 |

The procedure of the Comparative Example 1 was repeated to produce a random copolymer solution. It was a yellow clear polymer solution and had a solid content of about 61.6% and a Gardner-Holtz viscosity of I+1/2. The copolymer had a 12,119 Mw and 5,251 Mn.

**EXAMPLE 18**

Coating Compositions: Curing Property

**PART A: Curing Profiles of Coating Compositions**

Coating compositions in Table 28 were prepared from the polymer of Example 17 and the Comparative example 5.

**Table 28.** Coating Compositions.

| | Coating Composition 9 | Coating Composition 10 |
|---|---|---|
| | Weight (gram) | Weight (gram) |
| **Portion 1** | | |
| Polymer of Example 17 | 100.00 | |
| Polymer of Comparative Example 5 | | 100.00 |
| Byk 301 (10% solution, Byk Chemie) | 0.76 | 0.77 |
| Butyl acetate | 36.60 | 38.19 |
| **Portion 2** | | |
| Tolonate HOT (Rhodia Inc.,) | 15.43 | 15.61 |
| Total | 152.79 | 154.57 |

The coating compositions were prepared and activated as described in Example 3. No catalyst was used because of the high reactivity of the secondary amine groups. The coating samples were prepared on the potassium bromide plates, cured under various conditions, and the infrared spectra were measured in the same conditions as described in Example 3.

The results are recorded in Table 29 below.

**Table 29**. Curing Profiles.

| Time | Coating Composition 9 | | Coating Composition 10 | |
|---|---|---|---|---|
| | Accumulated % NCO conversion | % NCO conversion/hr | Accumulated% NCO conversion | % NCO conversion/hr |
| **Ambient condition** | | | | |
| Immediately after activation | 33.63 | | gelled | |
| 0.5 hr | 35.92 | 71.83 | | |
| 1 hr | 36.55 | 1.27 | | |
| 2 hrs | 36.86 | 0.31 | | |
| 4 hrs | 39.90 | 1.52 | | |
| 24 hrs | 47.67 | 0.39 | | |

Under the air dry condition, the triblock copolymer of Example 17 crosslinked extremely rapidly until almost all of the secondary amine groups were consumed (about 34% conversion). The crosslinking reaction then became very slow showing characteristics of the secondary hydroxyl groups curing without the catalyst. The random copolymer control was completely gelled immediately after activation, and no measurements could be obtained. Similar to the comparison in Example 13, at the stage where only the secondary amine groups were reacted, the crosslinked points were randomly and statistically distributed along the entire polymer chain in the random copolymer system. The level of crosslinking at this stage was high enough, higher than that of Example 13, and converted the system to an insoluble gel. The triblock copolymer was predominately crosslinked only in the center of the polymer chain. The rest of the polymer chain remained flexible.

Various modifications, alterations, additions or substitutions of the compositions and processes of this invention will be apparent to those skilled in the art. This invention is not limited by the illustrative embodiments set forth herein, but rather is defined by the following claims.

## Claims

1. A coating composition comprising a crosslinkable component, a crosslinking component and a liquid carrier in the form of at least one volatile organic solvent, wherein said crosslinkable component comprises a block copolymer comprising a block A and a block B, wherein said block A has a first crosslinking reactivity towards a crosslinking agent and wherein said block B has a second crosslinking reactivity towards said crosslinking agent, wherein said block copolymer has been produced by a method comprising the steps of:

   A) selecting ethylenically unsaturated monomers to form a first monomer mixture for the block A and a second monomer mixture for the block B such that said first crosslinking reactivity is different from said second crosslinking reactivity;
   B) polymerizing the first monomer mixture to form the block A; and
   C) polymerizing the block A and the second monomer mixture to form said block copolymer as a diblock AB copolymer.

2. The coating composition of claim 1, wherein the method for producing the block copolymer further comprises the step of polymerizing the diblock AB copolymer and the first monomer mixture to form said block copolymer as a triblock ABA copolymer.

3. The coating composition of claim 1, wherein the ethylenically unsaturated monomers are selected such that at least one of said first or said second monomer mixture comprises ethylenically unsaturated monomers having crosslinkable functional groups selected independently from primary amine, secondary amine, primary hydroxyl, secondary hydroxyl, or a combination thereof.

4. The coating composition of claim 3, wherein the ethylenically unsaturated monomers are selected so that the first monomer mixture and the second monomer mixture have different concentrations of said ethylenically unsaturated monomers having one or more crosslinkable functional groups.

5. The coating composition of claim 1, wherein the diblock AB copolymer comprises a block A polymerized from a monomer mixture of methyl methacrylate/isobornyl methacrylate/hydroxybutyl acrylate; and a block B polymerized from a monomer mixture comprising hydroxypropyl methacrylate/butyl methacrylate/2-ethylhexyl methacrylate.

6. The coating composition of claim 1, wherein the block copolymer further comprises a block C having a third crosslinking reactivity towards said crosslinking agent and wherein the method for producing the block copolymer further comprises the steps of (i) selecting ethylenically unsaturated monomers to form a third monomer mixture for the block C such that said first crosslinking reactivity is different from said second crosslinking reactivity and said second crosslinking reactivity is different from said third crosslinking reactivity; and (ii) polymerizing the diblock AB copolymer and the third monomer mixture to form said block copolymer as a triblock ABC copolymer.

7. The coating composition of claim 6, wherein the ethylenically unsaturated monomers are selected such that at least one of said first, said second or said third monomer mixture comprises ethylenically unsaturated monomers having crosslinkable functional groups selected independently from primary amine, secondary amine, primary hydroxyl, secondary hydroxyl, or a combination thereof.

8. The coating composition of claim 7, wherein the.ethylenically unsaturated monomers are selected so that the first, the second and the third monomer mixtures have different concentrations of said ethylenically unsaturated monomers having one or more crosslinkable functional groups.

9. The coating composition of claim 3 or 7, wherein said ethylenically unsaturated monomers having one or more crosslinkable functional groups are selected from monomers having the formula:

$$CH_2=C(R^1)-C(O)OX-R^2$$

wherein X is an linear or branched hydrocarbon diradical connecting group of 4 to 20 carbon atoms, $R^1$ is H or $CH_3$, and $R^2$ is a crosslinkable functional group selected from primary amine, secondary amine, primary hydroxyl, secondary hydroxyl, or a combination thereof.

10. The coating composition of claim 6, wherein the triblock ABC copolymer comprises a block A polymerized from a monomer mixture of methyl methacrylate/isobornyl methacrylate/hydroxybutyl acrylate, a block B polymerized from a monomer mixture of methyl methacrylate/butyl methacrylate; and a block C polymerized from a monomer mixture of hydroxypropyl methacrylate/butyl methacrylate/2-ethylhexyl methacrylate.

11. The coating composition of any one of the preceding claims, wherein the crosslinking agent comprises polyisocyanate, melamine, or a combination thereof.

12. A substrate coated with the coating composition of any one of the preceding claims.

13. The substrate of claim 12, wherein said substrate is a vehicle, vehicle body, vehicle body part, or a combination thereof.

**Patentansprüche**

1. Beschichtungszusammensetzung, umfassend eine vernetzbare Komponente, eine Vernetzungskomponente und einen flüssigen Träger in der Form von mindestens einem flüchtigen organischen Lösungsmittel, wobei die vernetzbare Komponente aus einem Blockcopolymer besteht, umfassend einen Block A und einen Block B, wobei der Block A eine erste Vernetzungsreaktivität gegenüber einem Vernetzungsmittel aufweist, und wobei der Block B eine zweite Vernetzungsreaktivität gegenüber dem Vernetzungsmittel aufweist, wobei das Blockcopolymer mittels eines Verfahrens hergestellt wurde, umfassend die Schritte von:

A) Auswählen von ethylenisch ungesättigten Monomeren zur Bildung eines ersten Monomergemischs für den Block A und eines zweiten Monomergemischs für den Block B dergestalt, dass sich die erste Vernetzungsreaktivität von der zweiten Vernetzungsreaktivität unterscheidet;

B) Polymerisieren des ersten Monomergemischs zur Bildung des Blocks A; und

C) Polymerisieren des Blocks A und des zweiten Monomergemischs zur Bildung des Blockcopolymers als ein AB-Diblockcopolymer.

2. Beschichtungszusammensetzung nach Anspruch 1, wobei das Verfahren zur Herstellung des Blockcopolymers ferner den Schritt des Polymerisierens des AB-Diblockcopolymers und des ersten Monomergemischs zur Bildung des Blockcopolymers als ein ABA-Triblockcopolymer umfasst.

3. Beschichtungszusammensetzung nach Anspruch 1, wobei die ethylenisch ungesättigten Monomere dergestalt ausgewählt sind, dass mindestens eines des ersten oder des zweiten Monomergemischs ethylenisch ungesättigte Monomere mit vernetzbaren funktionellen Gruppen umfasst, die unabhängig aus primärem Amin, sekundärem Amin, primärem Hydroxyl, sekundärem Hydroxyl oder einer Kombination davon ausgewählt sind.

4. Beschichtungszusammensetzung nach Anspruch 3, wobei die ethylenisch ungesättigten Monomere dergestalt ausgewählt sind, dass das erste Monomergemisch und das zweite Monomergemisch unterschiedliche Konzentrationen der ethylenisch ungesättigten Monomere mit einer oder mehr vernetzbaren funktionellen Gruppe(n) aufweisen.

5. Beschichtungszusammensetzung nach Anspruch 1, wobei das AB-Diblockcopolymer einen aus einem Monomergemisch aus Methylacrylat/Isobornylmethacrylat/Hydroxybutylacrylat polymerisierten Block A; und einen aus einem Monomergemisch, umfassend Hydroxypropylmethacrylat/Butylmethacrylat/2-Ethylhexylmethacrylat, polymerisierten Block B umfasst.

6. Beschichtungszusammensetzung nach Anspruch 1, wobei das Blockcopolymer ferner einen Block C mit einer dritten Vernetzungsreaktivität gegenüber dem Vernetzungsmittel umfasst und wobei das Verfahren zur Herstellung des Blockcopolymers ferner die Schritte wie folgt umfasst: (i) Auswählen ethylenisch ungesättigter Monomere zur Bildung eines dritten Monomergemischs für den Block C dergestalt, dass sich die erste Vernetzungsreaktivität von der zweiten Vernetzungsreaktivität unterscheidet und die zweite Vernetzungsreaktivität sich von der dritten Vernetzungsreaktivität unterscheidet; und (ii) Polymerisieren des AB-Diblockcopolymers und des dritten Monomergemischs zur Bildung des Blockcopolymers als ein ABC-Triblockcopolymer.

7. Beschichtungszusammensetzung nach Anspruch 6, wobei die ethylenisch ungesättigten Monomere dergestalt ausgewählt sind, dass mindestens eines des ersten, des zweiten oder des dritten Monomergemischs ethylenisch ungesättigte Monomere mit vernetzbaren funktionellen Gruppen umfasst, die unabhängig aus primärem Amin, sekundärem Amin, primärem Hydroxyl, sekundärem Hydroxyl oder einer Kombination davon ausgewählt ist.

8. Beschichtungszusammensetzung nach Anspruch 7, wobei die ethylenisch ungesättigten Monomere dergestalt ausgewählt sind, dass die ersten, die zweiten und die dritten Monomergemische unterschiedliche Konzentrationen der ethylenisch ungesättigten Monomere mit einer oder mehr vernetzbaren funktionellen Gruppe(n) aufweisen.

9. Beschichtungszusammensetzung nach Anspruch 3 oder 7, wobei die ethylenisch ungesättigten Monomere mit einer oder mehr vernetzbaren funktionellen Gruppe(n) aus Monomeren mit der Formel:

$$CH_2=C(R^1)-C(O)OX-R^2$$

ausgewählt sind, wobei X ein lineares oder verzweigtes Kohlenwasserstoff-Diradikal ist, welches die Gruppe aus 4 bis 20 Kohlenstoffen verbindet, $R^1$ H oder $CH_3$ ist, und $R^2$ eine vernetzbare funktionelle Gruppe ist, die aus primärem Amin, sekundärem Amin, primärem Hydroxyl, sekundärem Hydroxyl oder einer Kombination davon ausgewählt ist.

10. Beschichtungszusammensetzung nach Anspruch 6, wobei das ABC-Triblockcopolymer einen aus einem Monomergemisch aus Methylmethacrylat/Isobornylmethacrylat/Hydroxybutylacrylat polymerisierten Block A, einen aus einem Monomergemisch aus Methylmethacrylat/Butylmethacrylat polymerisierten Block B und einen aus einem Monomergemisch aus Hydroxypropylmethacrylat/Butylmethacrylat/2-Ethylhexylmethacrylat polymerisierten Block C umfasst.

11. Beschichtungszusammensetzung nach einem der vorangehenden Ansprüche, wobei das Vernetzungsmittel Polyisocyanat, Melamin oder eine Kombination davon umfasst.

**12.** Mit der Beschichtungszusammensetzung beschichtetes Substrat nach einem der vorangehenden Ansprüche.

**13.** Substrat nach Anspruch 12, wobei das Substrat ein Vehikel, Vehikelkörper, Vehikelkörperteil oder eine Kombination davon ist.

## Revendications

**1.** Composition de revêtement comprenant un composant réticulable, un composant de réticulation et un support liquide sous la forme d'au moins un solvant organique volatil, dans laquelle ledit composant réticulable comprend un copolymère bloc comprenant un bloc A et un bloc B, dans laquelle ledit bloc A possède une première réactivité de réticulation envers un agent de réticulation et dans laquelle ledit bloc B possède une deuxième réactivité de réticulation envers ledit agent de réticulation, dans laquelle ledit copolymère bloc a été produit par un procédé comprenant les étapes:

A) de choix de monomères éthyléniquement insaturés pour former un premier mélange de monomères pour le bloc A et un deuxième mélange de monomères pour le bloc B de sorte que ladite première réactivité de réticulation est différente de ladite deuxième réactivité de réticulation;
B) de polymérisation du premier mélange de monomères pour former le bloc A; et
C) de polymérisation du bloc A et du deuxième mélange de monomères pour former ledit copolymère bloc sous forme d'un copolymère dibloc AB.

**2.** Composition de revêtement selon la revendication 1, dans laquelle le procédé pour la production du copolymère bloc comprend en outre l'étape de polymérisation du copolymère dibloc AB et du premier mélange de monomères pour former ledit copolymère bloc sous forme d'un copolymère tribloc ABA.

**3.** Composition de revêtement selon la revendication 1, dans laquelle les monomères éthyléniquement insaturés sont choisis de sorte qu'au moins un desdits premier et deuxième mélanges de monomères comprend des monomères éthyléniquement insaturés possédant des groupes fonctionnels réticulables choisis indépendamment parmi une amine primaire, une amine secondaire, un hydroxyle primaire, un hydroxyle secondaire ou une combinaison de ceux-ci.

**4.** Composition de revêtement selon la revendication 3, dans laquelle les monomères éthyléniquement insaturés sont choisis de sorte que le premier mélange de monomères et le deuxième mélange de monomères ont des concentrations différentes desdits monomères éthyléniquement insaturés possédant des groupes fonctionnels réticulables.

**5.** Composition de revêtement selon la revendication 1, dans laquelle le copolymère dibloc AB comprend un bloc A polymérisé à partir d'un mélange de monomères de méthacrylate de méthyle/méthacrylate d'isobomyle/acrylate d'hydroxybutyle; et un bloc B polymérisé à partir d'un mélange de monomères comprenant du méthacrylate d'hydroxypropyle/méthacrylate de butyle/2-éthylhexylméthacrylate.

**6.** Composition de revêtement selon la revendication 1, dans laquelle le copolymère bloc comprend en outre un bloc C possédant une troisième réactivité de réticulation envers ledit agent de réticulation et dans laquelle le procédé pour la production du copolymère bloc comprend en outre les étapes (i) de choix de monomères éthyléniquement insaturés pour former un troisième mélange de monomères pour le bloc C de sorte que ladite première réactivité de réticulation est différente de ladite deuxième réactivité de réticulation et que ladite deuxième réactivité de réticulation est différente de ladite troisième réactivité de réticulation; et (ii) de polymérisation du copolymère dibloc AB et du troisième mélange de monomères pour former ledit copolymère bloc sous forme d'un copolymère tribloc ABC.

**7.** Composition de revêtement selon la revendication 6, dans laquelle les monomères éthyléniquement insaturés sont choisis de sorte qu'au moins un dudit premier, dudit deuxième ou dudit troisième mélange de monomères comprend des monomères éthyléniquement insaturés possédant des groupes fonctionnels réticulables choisis indépendamment parmi une amine primaire, une amine secondaire, un hydroxyle primaire, un hydroxyle secondaire ou une combinaison de ceux-ci.

**8.** Composition de revêtement selon la revendication 7, dans laquelle les monomères éthyléniquement insaturés sont choisis de sorte que le premier, le deuxième et le troisième mélanges de monomères ont des concentrations différentes desdits monomères éthyléniquement insaturés possédant un ou plusieurs groupes fonctionnels réticulables.

9. Composition de revêtement selon la revendication 3 ou 7, dans laquelle lesdits monomères éthyléniquement insaturés possédant un ou plusieurs groupes fonctionnels réticulables sont choisis parmi des monomères présentant la formule:

$$CH_2=C(R^1)-C(O)OX-R^2$$

dans laquelle X est un groupe de liaison diradical hydrocarbure linéaire ou ramifié de 4 à 20 atomes de carbone, $R^1$ est H ou $CH_3$ et $R^2$ est un groupe fonctionnel réticulable choisi parmi une amine primaire, une amine secondaire, un hydroxyle primaire, un hydroxyle secondaire ou une combinaison de ceux-ci.

10. Composition de revêtement selon la revendication 6, dans laquelle le copolymère tribloc ABC comprend un bloc A polymérisé à partir d'un mélange de monomères de méthacrylate de méthyle/méthacrylate d'isobomyle/acrylate d'hydroxybutyle, un bloc B polymérisé à partir d'un mélange de monomères de méthacrylate de méthyle/méthacrylate de butyle; et un bloc C polymérisé à partir d'un mélange de monomères de méthacrylate d'hydroxypropyle/méthacrylate de butyle/2-éthylhexylméthacrylate.

11. Composition de revêtement selon l'une quelconque des revendications précédentes, dans laquelle l'agent de réticulation comprend un polyisocyanate, une mélamine ou une combinaison de ceux-ci.

12. Substrat revêtu avec la composition de revêtement selon l'une quelconque des revendications précédentes.

13. Substrat selon la revendication 12, où ledit substrat est un véhicule, une carrosserie de véhicule, une pièce de carrosserie de véhicule ou une combinaison de ceux-ci.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6326059 B, Lewin
- US 6471185 B, Lewin
- US 20020132921 A1
- US 6174953 B1
- WO 0012579 A1
- US 6291620 B, Moad
- US 4680352 A, Janowicz
- US 4722984 A, Janowicz
- WO 03070843 A
- US 3585160 A
- US 4242243 A
- US 4692481 A
- US RE31309 E
- US 6221494 B

**Non-patent literature cited in the description**

- **Fox.** *Bull. Amer. Physics Soc.,* 1956, vol. 1 (3), 123